(19) **Europäisches Patentamt**
**European Patent Office**
**Office européen des brevets**

(11) **EP 4 610 642 A1**

(12) **EUROPÄISCHE PATENTANMELDUNG**

(43) Veröffentlichungstag:
**03.09.2025  Patentblatt 2025/36**

(51) Internationale Patentklassifikation (IPC):
*G01N 25/18* *(2006.01)*

(21) Anmeldenummer: **24160454.5**

(22) Anmeldetag: **29.02.2024**

(52) Gemeinsame Patentklassifikation (CPC):
**G01N 25/18**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Hahn-Schickard-Gesellschaft für angewandte Forschung e. V. 70569 Stuttgart (DE)**

(72) Erfinder:
• **Raimann, Philipp**
**79232 March (DE)**

• **Billat, Sophie**
**78052 VS-Weilersbach (DE)**
• **Hedrich, Frank**
**78052 Villingen-Schwenningen (DE)**
• **Ahsan, Muhammad**
**78056 Villingen-Schwenningen (DE)**
• **Dehé, Alfons**
**72770 Reutlingen (DE)**

(74) Vertreter: **Hertin und Partner Rechts- und Patentanwälte PartG mbB Kurfürstendamm 63 10707 Berlin (DE)**

(54) **VERFAHREN UND THERMISCHER SENSOR ZUR DETEKTION VON MIKROPLASTIK**

(57) In einem ersten Aspekt betrifft die Erfindung ein Verfahren zur Detektion von Mikroplastik in einer Probe. Bei dem erfindungsgemäßen Verfahren erfolgt zunächst eine Bereitstellung eines thermischen Sensors umfassend ein Heizelement und eine Sensorkomponente. Die Probe wird mit dem Heizelement in Kontakt gebracht. Das Heizelement wird oszillierend angesteuert mittels eines Ansteuerungssignals. Die Temperaturantwort des thermischen Sensors wird mittels der Sensorkomponente erfasst. Anhand der Temperaturantwort kann das Mikroplastik in der Probe detektiert werden.

Weiterhin betrifft die Erfindung einen thermischen Sensor zur Ausführung des erfindungsgemäßen Verfahrens und eine Verwendung des thermischen Sensors zur Detektion von Mikroplastik in einer Probe.

Fig. 1

EP 4 610 642 A1

**Beschreibung**

In einem ersten Aspekt betrifft die Erfindung ein Verfahren zur Detektion von Mikroplastik in einer Probe. Bei dem erfindungsgemäßen Verfahren erfolgt zunächst eine Bereitstellung eines thermischen Sensors umfassend ein Heizelement und eine Sensorkomponente. Die Probe wird mit dem Heizelement in Kontakt gebracht. Das Heizelement wird oszillierend angesteuert mittels eines Ansteuerungssignals. Die Temperaturantwort des thermischen Sensors wird mittels der Sensorkomponente erfasst. Anhand der Temperaturantwort kann das Mikroplastik in der Probe detektiert werden.

Weiterhin betrifft die Erfindung einen thermischen Sensor zur Ausführung des erfindungsgemäßen Verfahrens und eine Verwendung des thermischen Sensors zur Detektion von Mikroplastik in einer Probe.

Hintergrund und Stand der Technik

Das weltweite Produktionsvolumen an Kunstoffen (umgangssprachlich Plastik) wächst kontinuierlich an. Im Jahr 2022 wurden weltweit 400 Mio. Tonnen Kunststoffprodukte laut Daten von Statista produziert. Ungefähr ein Drittel dieses biologisch nicht-abbaubaren Plastiks gelangt ohne angemessene Kontrolle in die Umwelt und zersetzt sich durch Verwitterungsprozesse zu immer kleineren Partikeln, sogenanntes Mikroplastik. Das unsichtbare Mikroplastik reichert sich im Wasser, aber auch in der Luft sowie im Boden an und gelangt über die Atmung, Wasseraufnahme und Nahrung in den menschlichen Körper. Nach einer Studie des WWF (World Wide Fund For Nature) nimmt der Durchschnittsbürger pro Woche bis zu 5 Gramm Mikroplastik auf, was dem Gewicht einer Plastikkreditkarte entspricht (Senathirajah et al. (2021)). Mikroplastik birgt aufgrund seiner unregelmäßigen Formen Risiken für Menschen und Umwelt. Scharfe Mikroplastikpartikel können den menschlichen Körper physisch stimulieren und potenziell zu Toxizität führen. Darüber hinaus können Mikroplastikpartikel endokrine Disruptoren, Chemikalien, die bei der Herstellung von Kunststoffen verwendet werden, sowie andere giftige Substanzen wie Schwermetalle und organische Schadstoffe tragen, die sich nachteilig auf die menschliche Gesundheit auswirken können (Lim (2021)).

Im Jahr 2022 wurden erstmalig durch ein neues Analyseverfahren in 77 % der untersuchten Blutproben Ansammlungen von unterschiedlichen Plastikpartikeln gefunden (Heather et al. (2022)).

Ein Jahr später wurde experimentell gezeigt, dass Nanoplastikpartikel sogar in der Lage sind, die Blut-Hirn-Schranke zu durchdringen (Kopatz et al. (2023)). Um die gesundheitsschädliche Anreicherung von Plastikpartikeln im Körper zu reduzieren, ist es notwendig, die Konzentration der synthetischen Fremdkörper frühzeitig zu messen.

In Singh et al. (2023) wird eine Übersicht über derzeitig bekannte Verfahren gegeben, um Mikroplastik feststellen zu können. Die derzeitigen Methoden zur Detektion von Mikroplastik können kategorisiert werden in eine visuelle Inspektion, chemische Analysemethode, Mikroskopie und Spektroskopie.

Bei der visuellen Inspektion wird Mikroplastik durch das bloße Auge festgestellt. Dies kann jedoch nur dann zur Bestimmung von Mikroplastik eingesetzt werden, wenn derart große Mikroplastikpartikel in einer Probe vorliegen, dass diese auch mit dem Auge erkannt werden können. Auch die Farbe des Mikroplastiks ist bei dieser Methode relevant. Transparentes Mikroplastik oder verhältnismäßig kleine Mikroplastikpartikel (z. B. weniger als 50 $\mu$m) können durch eine visuelle Inspektion in der Regel nicht erkannt werden.

Bei chemischen Analysemethoden wird eine chemische Reaktion, beispielsweise eine Farbreaktion unter Einsatz eines fluoreszierenden Farbstoffes, wie z. B. Nilrot, genutzt, um Mikroplastik innerhalb einer Probe visualisieren zu können. Nachteilig bei chemischen Analysemethoden unter Verwendung eines Farbstoffes, ist jedoch, dass die Farbreaktion stark abhängig von der Probe und/oder dem zu detektierenden Mikroplastik sein kann. Mithin kann es dazu kommen, dass eine Farbreaktion nur für bestimmte Arten von Mikroplastik sensitiv ist, während andere Arten von Mikroplastik nicht detektiert werden können.

Die Mikroskopie bietet Vorteile aufgrund ihrer Sensitivität und Auflösung für Mikroplastik. Insbesondere können durch mikroskopische Methoden verschiedene Arten von Mikroplastik in Bezug auf dessen Beschaffenheit voneinander unterschieden werden. Typische mikroskopische Verfahren zur Detektion von Mikroplastik sind beispielsweise die Lichtmikroskopie, Stereomikroskopie, Fluoreszenzmikroskopie und Rasterelektronenmikroskopie. Nachteilig ist jedoch auch bei der Mikroskopie, dass eine Einschränkung bzgl. der detektierbaren Größe an Mikroplastik gegeben ist oder durch transparente Eigenschaften erschwert werden kann. Ferner ist die Mikrokopie zeit- und laborintensiv und demdentsprechend auch mit einem hohen Aufwand verbunden.

In Bezug auf Spektroskopiemethoden kann beispielsweise die Ramanspektroskopie oder Fourier-Transformations-Infrarotspektroskopie eingesetzt werden, um Mikroplastik zu detektieren. Mittels der Ramanspektroskopie kann vorteilhaft Mikroplastik detektiert werden, das eine Größe von weniger als 1 $\mu$m aufweist. Unter Einsatz der Fourier-Transformations-Infrarotspektroskopie kann sogar die Struktur des Mikroplastiks bestimmt werden.

Ein weiterer vielversprechender Einsatz zur Detektion von Mikroplastik ist die Impedanzspektroskopie. Bei der Impedanzspektroskopie wird ein Wechselstromwiderstand, die Impedanz, in Abhängigkeit von der Frequenz des Wechselstroms bestimmt. Dazu wird die Impedanz bei mehreren Frequenzen über einen Frequenzbereich gemessen.

In Becket & Michel (2021) wird ein Durchflusssensor offenbart, in dem Elektroden eingebracht vorliegen, welche eine Wechselspannung bereitstellen. Beim Durchfluss einer Probe in Form von einer Flüssigkeit wird die Impedanz aufgenommen. In Abhängigkeit davon, wieviel Mikroplastik in der Probe vorliegt, wird eine unterschiedliche Impedanz gemessen. Insbesondere ändert sich der Realteil der Impedanz bei niedrigen Frequenzen proportional zum Volumen von Mikroplastikpartikel. Auch in Meiler et al. (2023) werden impedanzspektroskopische Methoden vorgeschlagen, um Mikroplastik in Proben detektieren zu können.

Der Einsatz von gängigen spektroskopischen Verfahren ist jedoch in der Regel mit einem hohen Zeit- und Kostenaufwand verbunden und somit in der Praxis schwerer umzusetzen. Im Gegensatz zu den herkömmlichen Messsystemen ist der apparative Aufwand bei der Impedanzspektroskopie deutlich geringer. Allerdings können mittels der elektrischen Impedanzspektroskopie bisher nur Mikroplastikpartikel detektiert werden, die eine Größe von ca. 2 - 4 mm aufweisen. Mikroplastik mit einer solchen Dimensionierung in einer Probe ist allerdings auch mit dem bloßen Auge und damit über eine visuelle Methodik detektierbar. Insofern gehen mit der Impedanzspektroskopie, wenngleich sie auch Vorteile für die Detektion von Mikroplastik bietet, auch Einschränkungen hinsichtlich des detektierbaren Mikroplastiks einher.

Obwohl es eine Vielzahl von Ansätzen gibt, Mikroplastik detektieren zu können, gibt es dennoch im Stand der Technik den Bedarf für alternative bzw. verbesserte Verfahren zur Detektion von Mikroplastik.

Aufgabe der Erfindung

Aufgabe der Erfindung ist es, ein Verfahren zur Detektion von Mikroplastik zu bieten, welches die Nachteile des Standes der Technik beseitigt. Insbesondere ist es eine Aufgabe der Erfindung, ein Verfahren bzw. eine Vorrichtung zur Detektion von Mikroplastik bereitzustellen, welche eine zuverlässige Detektion von Mikroplastik unterschiedlicher Arten und Größen ermöglicht und sich dabei gleichzeitig durch eine einfache Handhabung bzw. Aufbau auszeichnet.

Zusammenfassung der Erfindung

Die Erfindung betrifft ein Verfahren zur Detektion von Mikroplastik in einer Probe umfassend folgende Schritte:

a) Bereitstellung eines thermischen Sensors umfassend ein Heizelement und eine Sensorkomponente,
b) In-Kontakt-Bringen der Probe mit dem thermischen Sensor,
c) Oszillierende Ansteuerung des Heizelementes mittels eines Ansteuerungssignales und Erfassung einer Temperaturantwort des thermischen Sensors mittels der Sensorkomponente,
d) Detektion des Mikroplastiks in der Probe anhand der Temperaturantwort.

Das erfindungsgemäße Verfahren ist zum einen dahingehend vorteilhaft, dass es besonders einfach umgesetzt werden kann. So erfordert das erfindungsgemäße Verfahren im Wesentlichen lediglich den Einsatz eines thermischen Sensors umfassend ein Heizelement und eine Sensorkomponente. Dabei soll das Heizelement mittels eines Ansteuerungssignals oszillierend angesteuert werden und die Temperaturantwort des thermischen Sensors erfasst werden. Mit dem erfindungsgemäßen Verfahren kann somit sowohl auf eine Verwendung von zusätzlichen chemischen Verbrauchskomponenten, wie z.B. Farbstoffen im Falle chemischer Analysen, als auch komplexen Geräten, wie beispielsweise Mikroskope für eine optisch Detektion, verzichtet werden.

Stattdessen kann das erfindungsgemäße Verfahren mit einem kompakten thermischen Sensor ausgeführt werden, wie an anderer Stelle näher erläutert. Vorteilhaft kann der thermische Sensor mittels der MEMS-Technologie ausgeführt werden.

Vorteilhaft kann ein thermischer Sensor somit zum einen besonders kompakt ausgestaltet sein und bedarf zum anderen keine chemischen Substanzen, welche ein Laborsetting erfordern. Dies ermöglicht vorteilhaft eine Vor-Ort-Analyse von Proben zur Detektion Mikroplastik. Kosten- und zeitsensitive Analysen im Labor sind nicht notwendig. Stattdessen kann das erfindungsgemäße Verfahren mit einfachen Mitteln an verschiedensten Stellen von Interesse sein, beispielsweise Wasserleitungen, Umweltbereichen oder innerhalb von Industrieanlagen eingesetzt werden. Durch die mögliche Bereitstellung kostengünstiger und kompakter thermischer Sensoren lässt sich das Verfahren zudem auf wirtschaftliche Weise skalieren und beispielsweise für eine flächendeckende Überwachung von Mikroplastik verwenden. Mittels kommunikationsfähiger thermischer Sensoren können dabei auch inlinefähige Daten zu etwaigen Verschmutzung durch Mikroplastik in verschiedensten Bereichen gewonnen werden, um hieraus Handlungsstrategien zur Prävention oder Vermeidung abzuleiten.

Möglich wird das erfindungsgemäß vereinfachte Verfahren unter minimalen Ressourceneinsatz durch die Erkenntnis, dass die Tatsache, dass sich die Probe und das Mikroplastik in ihren thermischen Eigenschaften voneinander unterscheiden, technisch zur thermischen Detektion von Mikroplastik genutzt werden kann. So kann insbesondere auf überraschend sensitive Weise anhand einer Temperaturantwort eines thermischen Sensors bei einer oszillierenden Ansteuerung auf Mikroplastik in einer Probe geschlossen werden. Hierbei wird ausgenutzt, dass eine Probe in Abhängigkeit des Anteils an Mikroplastik unterschiedliche thermische Eigenschaften aufweist. So ändert sich die Temperaturantwort des thermischen Sensors signifikant insofern, dass beispielsweise nicht nur Wasser als solches in der Probe vorliegt, sondern zudem in dem Wasser auch Mikroplastik enthalten ist. Mögliche Aussagen sind hierbei, wie im Folgenden näher erläutert, nicht nur qualitativer Natur hinsichtlich eines Vorhandenseins oder Nicht-Vorhandenseins von Mikroplastik, sondern können vorzugsweise zudem einen quantitativen Wert aufweisen, indem eine absolute Menge oder Konzentration des Mikroplastiks in der Probe messbar ist.

Das kann, ohne auf die Theorie beschränkt zu sein, zumindest teilweise darauf zurückgeführt werden, dass sich die Dynamik einer thermischen Welle ändert, sofern Mikroplastik in einer Probe vorliegt. Eine thermische Welle bezeichnet bevorzugt ein räumlich und zeitlich veränderliches Temperaturfeld, das durch eine oszillierende Ansteuerung des Heizelementes in Form eine Erwärmung der Probe hervorgerufen werden kann. Anders ausgedrückt, breitet sich eine thermische Welle, deren Ausbreitung durch die oszillierende Ansteuerung des Heizelementes verursacht wird, vorzugsweise in Abhängigkeit vom Mikroplastik in der Probe anders aus. Dieses Verhalten spiegelt sich insbesondere in einer Temperaturantwort des thermischen Sensors wider, über die eine thermische Eigenschaft der Probe bestimmt werden kann, um einen Rückschluss auf das Mikroplastik zu ermöglichen.

Die Temperaturantwort bezieht sich bevorzugt auf ein Signal, welches vom thermischen Sensor infolge der Erwärmung der Probe umfassend das Mikroplastik durch die oszillierende Ansteuerung des Heizelementes erfasst wird. Die Temperaturantwort stellt somit bevorzugt eine Reaktion des thermischen Sensors auf eine oszillierende Ansteuerung des Heizelementes dar, wobei aufgrund einer Abhängigkeit vom Einfluss der Probe umfassend das Mikroplastik Aussagen über thermische Eigenschaften desselben ermöglicht werden.

Da thermische Eigenschaften materialspezifisch sind, kann vorzugsweise zudem eine zuverlässige Bestimmung der Zusammensetzung des Mikroplastiks ermöglicht werden. Mit der Zusammensetzung ist bevorzugt hierbei insbesondere die chemische Komposition und damit die Art bzw. Beschaffenheit des Mikroplastiks gemeint. Insofern liegt vorteilhaft keine Einschränkung bzgl. der Größe des zu detektierenden Mikroplastiks beim erfindungsgemäßen Verfahren vor. Ferner wird eine Detektion auch unabhängig von der Farbe und/oder der geometrischen Ausgestaltung des Mikroplastiks ermöglicht. Es wird erfindungsgemäß genutzt, dass sich die thermischen Eigenschaften einer Probe ändern, wenn diese Mikroplastik enthält. Durch die Temperaturantwort können eine oder mehrere thermische Eigenschaften der Probe detektiert werden. Über die Änderung der thermischen Eigenschaften in der Probe durch das Mikroplastik, was sich in der Temperaturantwort widerspiegelt, ist ein Rückschluss auf das Mikroplastik selbst möglich.

Das erfindungsgemäße Verfahren dient insbesondere der Detektion von Mikroplastik in einer Probe.

Im erfindungsgemäßen Kontext bezeichnet Mikroplastik vorzugsweise ein oder mehrere Plastikpartikel. Die Ausdrücke "Partikel" und "Stück" können synonym verwandt werden, sodass es sich bei Plastikstücken auch um Plastikpartikel handelt. Mikroplastik kann bevorzugt eine Größe von bis zu ca. 5 mm aufweisen, bevorzugt von ca. 0,1 - 5 mm, besonders bevorzugt 0,1 - 1000 $\mu$m (Mikrometer). Mikroplastik kann auch eine Dimensionierung von 1 - 1000 nm (Nanometer) umfassen. Das Mikroplastik kann primäres oder sekundäres Mikroplastik sein. Primäres Mikroplastik wird bevorzugt gebildet durch ein Basismaterial (auch bekannt als Pellets), welche das Grundmaterial für die Plastikproduktion darstellt. Dazu gehören beispielsweise Granulate in Kosmetik und Hygieneprodukten, wie z. B. Peelings, Zahnpasta, Handwaschmittel, mikroskopische Plastikpartikel, die in Reinigungsstrahlern, zum Beispiel auf Werften, eingesetzt werden oder in der Medizin als □Vektor□ für Wirkstoffe von Arzneien Anwendung finden. Sekundäres Mikroplastik entsteht durch physikalische, biologische und/oder chemische Degradation von Makroplastik.

Die Begriffe "Plastik" und "Kunststoff" können im erfindungsgemäßen Kontext synonym verwandt werden. Beim Mikroplastik handelt es sich bevorzugt um ein festes und unlösliches synthetisches Polymer (Kunststoff). Synthetische Polymere werden bevorzugt durch Polyreaktionen industriell oder im Labormaßstab hergestellt. Beispielhafte Polymere, die häufig als Mikroplastik in der Umwelt erscheinen, sind Polyethylen (PE), Polypropylen (PP), Polyamid (PA), Polyurethan (PU), Per- und/oder Polyfluorierte Anwendungen (PFAS) ohne hierauf beschränkt zu sein.

Das Mikroplastikwird erfindungsgemäß in einer Probe detektiert. Die Probe meint bevorzugt eine Zusammensetzung, die mindestens ein Trägermedium und (potentiell) das Mikroplastik umfasst. Das Trägermedium bezeichnet bevorzugt einen Stoff, der das Mikroplastik enthalten kann. Bevorzugt liegt das Trägermedium in flüssiger Phase vor. Da Mikroplastik unlöslich ist, liegt die Probe - sofern diese Mikroplastik enthält - bevorzugt als Dispersion vor. Insbesondere liegt die Probe im Falle eines Anteils von Mikroplastik als eine Suspension vor, wobei das Mikroplastik in fester Phase in einem bevorzugt flüssigen Trägermedium vorliegt. Das Trägermedium kann beispielsweise Wasser sein, wobei das Wasser beispielsweise Quellwasser, Leitungswasser, Regenwasser, Grundwasser, Seewasser, Flusswasser, Meerwasser sein kann, ohne auf diese beispielhaft genannten Wassersorten beschränkt zu sein.

Dass sich das Mikroplastik in der Probe befindet, meint bevorzugt, dass das Mikroplastik innerhalb der Probe eingebracht ist, wobei das Mikroplastik sowohl räumlich im Wesentlichen homogen innerhalb der Probe oder in Abhängigkeit einer Auftriebskraft auch unterschiedlich konzentriert vorliegen kann. Insofern umfasst das Vorliegen des Mikroplastiks in der Probe beispielsweise sowohl ein Vorliegen innerhalb und unterhalb der Oberfläche der Probe, eine gleichmäßige Verteilung als auch ein Versinken von Mikroplastik der Probe. Eine räumliche Verteilung des Mikroplastiks in der Probe hängt von der Dichte des Mikroplastiks und der Dichte des Trägermediums ab, was, wie an anderer Stelle näher erläutert, ebenfalls für eine Steigerung der Sensitivität der Messungen genutzt werden kann.

Für die Ausführung des Verfahrens wird bevorzugt ein thermischer Sensor bereitgestellt. Der thermische Sensor umfasst vorzugsweise ein Heizelement und eine Sensorkomponente. Das Heizelement bezeichnet bevorzugt diejenige Komponente des thermischen Sensors, die der Probe Wärmeenergie zuführt. Ausgehend von dem Heizelement breitet sich eine thermische Welle in die Probe aus. Inwieweit sich die thermische Welle durch bzw. in die Probe hinein ausbreitet, kann insbesondere durch die Eindringtiefe beschrieben werden. Diese hängt von der Frequenz der oszillierenden Ansteuerung sowie der thermischen Eigenschaften der Probe ab. Die Sensorkomponente bezeichnet bevorzugt die Komponente des thermischen Sensors, mit der eine Temperaturantwort des thermischen Sensors erfasst wird. Die Sensorkomponente kann bevorzugt durch einen Temperatursensor gebildet werden. Es kann aber ebenfalls bevorzugt sein, dass das Heizelement selbst die Sensorkomponente bildet.

Ferner erfolgt ein In-Kontakt-Bringen der Probe mit dem thermischen Sensor. Das In-Kontakt-Bringen meint bevorzugt ein thermisches Kontaktieren der Probe mit dem thermischen Sensor, sodass die Messung einer probenabhängigen Temperaturantwort nach einer oszillierenden Ansteuerung des Heizelementes möglich wird. Das In-Kontakt-Bringen bzw. thermische Kontaktieren kann sowohl eine direkte Kontaktierung als auch eine indirekte Kontaktierung meinen, beispielsweise vermittelt über eine thermisch leitende Zwischenschicht meinen.

Zum In-Kontakt-Bringen der Probe mit dem Heizelement kann es bevorzugt sein, dass die Probe auf den thermischen Sensor aufgebracht wird, beispielsweise als ein Tropfen für eine flüssige Probe oder der thermische Sensor in die Probe, beispielsweise im Falle einer Flüssigkeit, eingebracht, vorzugsweise eingetaucht, wird.

Die Ansteuerung des Heizelementes ist oszillierend, sodass die Bereitstellung eines Wärmefeldes ausgehend vom Heizelement ebenfalls oszillierend ist. Durch den Ausdruck "oszillierend" ist bevorzugt gemeint, dass eine periodische Erwärmung des Messfluides bewirkt wird. Somit liegen abwechselnde Phasen vor, in denen das Messfluid erwärmt und abgekühlt wird. Die entsprechenden Phasen werden bevorzugt durch ein periodisches Ansteuerungssignal für das Heizelement hervorgerufen. Bevorzugte Ansteuerungssignale für eine oszillierende Ansteuerung des Heizelementes können vorzugsweise durch eine Funktion beschrieben werden, welche beispielsweise ausgewählt ist aus einer Gruppe umfassend eine harmonische Funktion (wie z. B. eine Sinus- und/oder Cosinusfunktion), eine Rechteckfunktion, eine Impulsfunktion, eine Dreiecksfunktion und/oder eine Sägezahnfunktion, ohne darauf beschränkt zu sein. Da eine oszillierende Ansteuerung insbesondere von einer Frequenz abhängig ist, ist auch die Ansteuerung des Heizelementes vorzugsweise entsprechend frequenzabhängig. Die Ansteuerung des Heizelementes kann bevorzugt mit einer Frequenz oder mit einer Mehrzahl von Frequenzen über einen Frequenzbereich erfolgen.

Mittels der Sensorkomponente wird nach einer oszillierenden Ansteuerung des Heizelementes eine Temperaturantwort des thermischen Sensors erfasst. Die Temperaturantwort bezieht sich bevorzugt auf ein Signal, welches vom thermischen Sensor infolge der Erwärmung der Probe durch die oszillierende Ansteuerung des Heizelementes erfasst wird. Die Temperaturantwort stellt somit bevorzugt eine Reaktion des thermischen Sensors auf eine oszillierende Ansteuerung des Heizelementes dar, wobei aufgrund einer Abhängigkeit vom Einfluss der Erwärmung auf die Probe Aussagen über thermische Eigenschaften der Probe über die Temperaturantwort ermöglicht werden. Da die Ansteuerung des Heizelementes oszillierend ist, bildet auch die Temperaturantwort vorzugsweise ein oszillierendes Signal.

Über die Temperaturantwort kann wiederrum eine thermische Eigenschaft der Probe bestimmt werden, wodurch es ermöglicht wird, das Mikroplastik in der Probe zu detektieren. Dazu kann es bevorzugt sein, dass Messreihen vorliegen, bei denen eine thermische Eigenschaft einer Zusammensetzung von Mikroplastik zugeordnet ist, wodurch bei einer entsprechenden Temperaturantwort und damit auch einer entsprechenden thermischen Eigenschaft das entsprechende Mikroplastik dazu zugeordnet werden kann.

Erfindungsgemäß wurde erkannt, dass die thermischen Eigenschaften der Probe mit der Belastung an Mikroplastik in der Probe korreliert. Mit der Belastung ist insbesondere der Gehalt an Mikroplastik in der Probe gemeint. Je nach Belastung an Mikroplastik breiten sich die vom Heizelement ausgehenden Temperaturwellen, welche durch die oszillierende Ansteuerung verursacht werden, unterschiedlich aus. Dies ist wiederrum anhand der aufgenommenen Temperaturantwort über die Sensorkomponente festzustellen, wodurch das Mikroplastik in der Probe detektiert werden kann. Mit der Detektion von Mikroplastik ist insbesondere gemeint, dass mindestens das Vorhandensein von Mikroplastik und/oder ein Parameter des Mikroplastiks in der Probe festgestellt wird, beispielsweise dessen Konzentration innerhalb der Probe, dessen Menge (Gewicht oder Volumen) oder aber auch dessen Zusammensetzung (z. B. Arten von Plastik oder Größe und/oder die Struktur des Mikroplastiks). Bevorzugt kann die Belastung auch in einer Anzahl an Mikroplastikpartikel pro Volumeneinheit angegeben werden, ohne hierauf beschränkt zu sein.

In einer weiteren bevorzugten Ausführungsform ist das Verfahren dadurch gekennzeichnet, dass die Detektion des Mikroplastiks in der Probe anhand einer Messung einer Amplitude und/oder einer Phase der Temperaturantwort erfolgt.

Wie obig ausgeführt wurde, erfolgt die Ansteuerung des Heizelementes oszillierend. Damit ist auch die Temperaturantwort des thermischen Sensors ein oszillierendes Signal. Die Temperaturantwort des thermischen Sensors kann bevorzugt über eine Amplitude und/oder Phase charakterisiert werden. Hierbei bezeichnet die Phase der Temperaturantwort insbesondere die Phasendifferenz zwischen der Temperaturantwort und dem Ansteuerungssignal für eine oszillierende Anregung des Heizelementes. Die Amplitude und/oder die Phase ermöglichen vorteilhaft eine präzise Bestimmung von mindestens einer thermischen Eigenschaft der Probe.

Das Mikroplastik ist insbesondere über eine Amplitude und/oder Phase Temperaturantwort des thermischen Sensors bestimmbar. Hierbei ist die Temperaturantwort vorzugsweise durch ein harmonisches Messsignal festgelegt, welches, je nach Zusammensetzung und/oder thermodynamischen Parametern der Probe, anders ausfällt.

Beispielsweise kann eine Bestimmung der Phase zwischen dem Ansteuerungssignal und der Temperaturantwort insbesondere genutzt werden, um eine Wärmeleitfähigkeit zu bestimmen. Eine Amplitude der Temperaturantwort hängt insbesondere auch von der Wärmeleitfähigkeit sowie der volumetrischen Wärmekapazität ab. Mithin kann über die Phase und Amplitude der Temperaturantwort beispielsweise eine Wärmeleitfähigkeit und volumetrische Wärmekapazität der Probe mit hoher Sensitivität gemessen werden. Anhand dessen kann eine Schlussfolgerung über das Mikroplastik in der Probe getroffen werden, beispielsweise über eine Präsenz, eine Konzentration, eine Masse, eines Volumens und/oder einer Zusammensetzung des Mikroplastiks in der Probe.

In bevorzugten Ausführungsformen wird zu diesem Zweck zunächst eine Kalibrierungsmessung vorgenommen. Hierbei wir vorzugsweise für eine erfindungsgemäße oszillierende Ansteuerung eine Temperaturantwort, insbesondere eine Amplitude und/oder Phase einer Temperaturantwort für eine Messreihe von Kalibrierproben mit verschiedenen vorgegebenen Anteilen an Mikroplastik aufgenommen. Vorzugsweise weisen die Kalibrierproben ein mit der zu messenden Probe identisches Trägermedium (beispielsweise Wasser) auf, unterscheiden sich jedoch untereinander in einer Präsenz, einer Konzentration, einer Zusammensetzung, einer Masse und/oder einem Volumen von Mikroplastik in der Probe.

Mittels der Kalibrierungsmessung kann für den thermischen Sensor entsprechend ein Zusammenhang zwischen einer aus der Temperaturantwort ableitbaren Größe (beispielsweise einer Phase und/oder Amplitude) eine Präsenz, eine Konzentration, eine Zusammensetzung, eine Masse und/oder ein Volumen von Mikroplastik in der Probe bestimmt werden. Unter Kenntnis einer entsprechenden Kalibrierungskurve kann somit im späteren Einsatz des thermischen Sensors auf einfache Weise unter Messung einer bestimmten Temperaturantwort (bzw. z. B. deren Phase und/oder Amplitude) auf eine Präsenz, eine Konzentration, eine Zusammensetzung, Masse und/oder Volumen von Mikroplastik geschlossen werden.

Wie die folgende Tabelle zeigt, kann zu diesem Zweck ausgenutzt werden, dass thermische Eigenschaften von bestimmten Mikroplastiksorten im Vergleich von Wasser als ein beispielhaftes Trägermedium der Probe variieren:

Tabelle 1:

| Material | Wärmeleitfähigke it (W*m$^{-1}$*K$^{-1}$) | Volumetrische Wärmekapazität (kJ*K$^{-1}$*m$^{-3}$) | Temperaturleitfähigkeit*10$^{-8}$*(m$^2$*s$^{-1}$) |
|---|---|---|---|
| Wasser | 0,60 | 4180 | 14,35 |
| Polyethylen | 0,35 | 2116 | 15,79 |
| Polyamid | 0,29 | 2599 | 11,16 |
| Polytetrafluor ethylen | 0,23 | 2288 | 10,05 |

Mithin unterscheiden sich insbesondere die Amplitude der Temperaturantwort und die Amplitude für das Ansteuerungssignal des Heizelementes, wenn Mikroplastik in der Probe vorhanden ist. Es kann auch sein, dass eine Phasenverschiebung der Temperaturantwort gegenüber dem Ansteuerungssignal vorliegt. Durch die Amplitude und/oder Phasenverschiebung kann es ermöglicht werden, auf thermische Eigenschaften der Probe zu schließen, über die wiederrum ein Rückschluss auf das Mikroplastik ermöglicht wird.

So kann es beispielsweise bevorzugt sein, dass anhand der Temperaturantwort, insbesondere über die Phase und Amplitude der Temperaturantwort, thermische Eigenschaften wie z. B. die Wärmeleitfähigkeit und die Temperaturleitfähigkeit gemessen werden und über Kalibrationswerte die Bestimmung des Mikroplastiks in der Probe ermöglicht wird.

So kann es beispielsweise bevorzugt sein, über eine oder mehrere Frequenzen die Temperaturantwort zu erfassen. Die Amplitude und die Phase der Temperaturantwort können vorzugsweise mithin in Abhängigkeit der eine oder mehrere Frequenzen bestimmt werden.

Eine Vergleichs- oder Kalibriermessung kann beispielsweise eine Messreihe umfassen, welche Temperaturantworten für unterschiedliche Proben mit definierter Wärmeleitfähigkeit und/oder die Temperaturleitfähigkeit betreffen.

Hierbei ist festzustellen, dass die Amplitude einer Temperaturantwort vorzugsweise insbesondere von der Wärmeleitfähigkeit und einer thermischen Diffusivität bzw. Temperaturleitfähigkeit abhängt, während die Phase insbesondere von einer Temperaturleitfähigkeit, jedoch nicht oder nur im verminderten Maße von einer Wärmeleitfähigkeit abhängt.

Insofern können Kalibrationsdaten auf Basis von Messreihen für Vergleichsmessungen vorzugsweise diese Abgängigkeiten berücksichtigen, welche im Vorfeld der Messung für verschiedene Proben mit bekannten thermischen Eigenschaften und/oder Anteilen an Mikroplastik aufgenommen wurden. Nach einer Bestimmung der Amplitude und der Phase der Temperaturantwort für eine zu messende Probe kann über die Kalibrationsdaten durch eine entsprechende Zuordnung auf die Wärmeleitfähigkeit und Temperaturleitfähigkeit der Probe geschlossen werden, wodurch eine entsprechende Bestimmung des Mikroplastiks erfolgen kann.

Eine geringere Wärmeleitfähigkeit der Probe (im Falle eines höheren Anteils an Mikroplastik) geht dabei vorzugsweise mit einer höheren Amplitude der Temperaturantwort der Probe einher. Umgekehrt wird bei einer höheren Wärmeleitfähigkeit der Probe (im Falle eines höheren Anteils an Mikroplastik) eine geringere Amplitude der Temperaturantwort zu erwarten sein.

Eine betragsmäßig höhere Phase korrespondiert hingegen vorzugsweise mit einer geringeren Temperaturleitfähigkeit während eine betragsmäßig geringere Phase vorzugsweise eine höhere Temperaturleitfähigkeit der Probe anzeigt.

Durch die Erfassung der Amplitude und Phase kann somit vorteilhaft auf eine Wärmeleitfähigkeit und Temperaturleitfähigkeit geschlossen werden, wodurch sich vorzugsweise nicht nur eine Konzentration oder Menge (Masse, Volumen) des Mikroplastiks, sondern auch Aussagen über dessen Zusammensetzung ermitteln lassen.

Der Einfluss des Mikroplastik in der Probe auf die Temperaturantwort des thermischen Sensors erfolgt insbesondere über eine räumliche Ausdehnung vom thermischen Sensor, welche durch die thermischen Eindringtiefe $\delta_t$ vorgegeben ist. Die thermische Eindringtiefe ist bevorzugt definiert als eine Strecke, die die Wärme bzw. eine thermische Welle ausgehend vom Heizelement während einer Zeit 1/f, wobei f die Frequenz meint, diffundiert.

Die Eindringtiefe gibt mithin zudem vor, über welchen räumlichen Bereich ausgehend von dem thermischen Sensor eine Detektion des Mikroplastiks in der Probe erfolgt. Wie im Folgenden näher erläutert, lässt sich die Eindringtiefe u. a. durch eine Auswahl der Frequenz des Ansteuerungssignals vorgeben. Für einige Anwendungen kann es vorteilhaft sein, eine geringe Eindringtiefe vorzugeben, sodass eine lokale Messung des Mikroplastiks in unmittelbarer Nähe zum Sensor erfolgt. Dies kann beispielsweise bei einer Detektion in Rohren von Interesse sein, um eine Konzentration des Mikroplastiks am Rand mit geringer Strömung des Fluides zu bestimmen. Für andere Anwendungen kann es auch bevorzugt sein, eine größere Eindringtiefe vorzugeben, um das Mikroplastik über einen ausgedehnteren und mithin aussagekräftigeren Bereich der Probe zu detektieren.

Die thermische Eindringtiefe $\delta_t$ ist mathematisch definiert als

$$\delta_t = \sqrt{\frac{\alpha}{2\pi f}} = \sqrt{\frac{k}{2\pi f \rho c}},$$

wobei $\alpha = k/(\rho c)$ die thermische Diffusivität bzw. die Temperaturleitfähigkeit angibt, f die Frequenz des Ansteuerungssignals, $\rho$ die Dichte der Probe, k die Wärmeleitfähigkeit und c die spezifische Wärmekapazität der Probe.

Mithin kann insbesondere auch durch die Frequenz des Ansteuerungssignals die Eindringtiefe der von dem Heizelement ausgehenden thermischen Welle vorgegeben werden. Durch Einstellung einer höheren Frequenz für das Ansteuerungssignal kann eine geringere Eindringtiefe der thermischen Welle in die Probe vorgeben werden im Vergleich zu einer niedrigeren Frequenz.

In einer weiteren bevorzugten Ausführungsform ist das Verfahren dadurch gekennzeichnet, dass die Detektion des Mikroplastiks in der Probe eine Bestimmung einer Präsenz, einer Konzentration, einer Zusammensetzung, Masse und/oder Volumens des Mikroplastiks in der Probe umfasst.

Die Bestimmung der Präsenz meint bevorzugt eine Feststellung eines Vorhandenseins des Mikroplastiks innerhalb der Probe. Die Präsenz bezieht sich somit bevorzugt auf eine qualitative Aussage, wonach Mikroplastik innerhalb der Probe vorhanden ist oder nicht. Die Aussage über eine Präsenz erfolgt bevorzugt in Abhängigkeit einer Detektionsschwelle, beispielsweise einer minimalen Konzentration oder Menge an Mikroplastik, welche mittels des Verfahrens noch detektierbar ist. Die Feststellung einer Präsenz von Mikroplastik meint mithin bevorzugt, dass eine Menge oder Konzentration von Mikroplastik oberhalb der Detektionsschwelle detektiert wurde.

Die Bestimmung der Konzentration meint vorzugsweise, dass ein Gehalt des Mikroplastiks bezogen auf das Volumen der Probe nach DIN 1310 bestimmt wird. Die Konzentration kann bevorzugt angegeben werden durch eine Stoffmengenkonzentration, d. h. über die Stoffmenge des Mikroplastiks pro Volumen der Probe mit der Maßeinheit mol/l (Mol pro Liter). Es kann auch bevorzugt sein, dass die Konzentration über die Massenkonzentration angegeben wird, welche als Masse des Mikroplastiks pro Volumen der Probe angegeben wird, beispielsweise mit der Einheit g/l (Gramm pro Liter). Weiterhin kann es bevorzugt sein, die Konzentration über die Partikelkonzentration anzugeben, die vorzugsweise definiert ist als die Anzahl der Partikel an Mikroplastik pro Volumen der Probe mit der Einheit 1/l (1 pro Liter) oder $1/m^3$ (1 pro Kubikmeter).

Mittels des erfindungsgemäßen Verfahrens ist es vorteilhaft möglich, einen breiten Konzentrationsbereich zu erfassen. Insbesondere können auch besonders feine Konzentrationen von Mikroplastik in einer Probe bestimmt werden. So können beispielsweise 0,01 - 10 000 Partikel an Mikroplastik pro Kubikmeter detektiert werden, insbesondere auch 0,01 - 100 Partikel pro Kubikmeter.

Die Masse des Mikroplastikmeint bevorzugt das Gewicht und kann mit den gängigen Maßeinheiten g (Gramm) oder kg (Kilogramm) angegeben werden. Für Angaben der Konzentration von Mikroplastik in einer Probe meint bezieht ein Volumen auf das der Probe. Das Volumen kann beispielsweise in Liter (Kubikdezimeter), Milliliter, Kubikmeter, Kubikzentimeter (Milliliter) oder Kubikmillimeter angegeben werden.

Während das Verfahren somit einerseits dafür geeignet ist, einen relativen Anteil des Mikroplastiks an einer Gesamtmenge der Probe festzustellen, kann das Verfahren andererseits ebenfalls dafür geeignet sein, absolute Mengen des Mikroplastiks innerhalb der Probe (beispielsweise eine Masse oder ein Volumen) zu bestimmen. Der Fachmann weiß selbstverständlich, dass unter Kenntnis eines Gesamtgewichts oder Gesamtvolumens der Probe diese Größe ohne Weiteres ineinander überführbar sind.

Eine Detektion einer Präsenz, eines relativen Anteils oder einer absoluten Menge des Mikroplastik kann wie obig erläutert vorzugsweise über eine Bestimmung thermischer Eigenschaften der zu messenden Probe, wie deren Temperaturleitfähigkeit oder Wärmeleitfähigkeit, erfolgen. Vorzugsweise unterscheidet sich Mikroplastik in Bezug auf diese thermischen Eigenschaften wie obige Tabelle 1 zeigt, auch unabhängig von einer konkreten Art der Polymere, stark von typischen Trägermedien wie Wasser. Hierdurch wird vorzugsweise eine quantitative Ermittlung einer Konzentration oder Menge ermöglicht, unabhängig von einer Bestimmung der konkreten Zusammensetzung des Mikroplastiks. Einer derartigen Bestimmung kann bevorzugt eine durchschnittlich erwartbare Zusammensetzung von Mikroplastik zu Grunde gelegt werden.

Neben derartigen Aussagen über eine Präsenz, relativem Anteil oder absoluter Menge des Mikroplastiks können mittels des Verfahrens vorteilhaft jedoch ebenfalls Aussagen über eine Zusammensetzung des Mikroplastik getroffen werden.

Mit der Zusammensetzung ist bevorzugt eine chemische Zusammensetzung des Mikroplastiks gemeint. Insbesondere meint die Zusammensetzung, um welche Art von Mikroplastik es sich handelt bzw. welche Polymere (z. B. Polyethylen, Polyamid, Polytetrafluorethylen) vorwiegend das Mikroplastik bilden.

Wie aus Tabelle 1 ersichtlich unterscheiden sich die thermischen Eigenschaften von Polymeren, welche Mikroplastik bilden, nicht nur deutlich von einem typischen Trägermedium einer Probe, wie z. B. Wasser, sondern zudem auch untereinander. Die spezifischen thermischen Eigenschaften der jeweiligen Polymere können vorteilhaft als ein thermischer Fingerabdruck dazu dienen, Aussagen über eine Zusammensetzung zu erhalten, beispielsweise über relative Anteile verschiedener Polymere (wie z.B. Polyethylen, Polyamid oder Polytetrafluorethylen) am Mikroplastik.

In einer weiteren bevorzugten Ausführungsform ist das Verfahren dadurch gekennzeichnet, dass die Probe ein Trägermedium und das Mikroplastik umfasst, wobei vorzugsweise das Trägermedium und das Mikroplastik sich in mindestens einer thermischen Eigenschaft unterscheiden.

Das Trägermedium bezeichnet bevorzugt das Medium, in dem das Mikroplastik enthalten ist. Bevorzugt ist das Trägermedium eine Flüssigkeit und das Mikroplastik ein Feststoff, sodass vorzugsweise die Probe als Suspension vorliegt.

Die mindestens eine thermische Eigenschaft, in der sich das Mikroplastik und das Trägermedium voneinander unterscheiden, kann bevorzugt ausgewählt sein aus einer Gruppe umfassend eine Wärmeleitfähigkeit, eine Dichte, eine spezifische Wärmekapazität und/oder eine Temperaturleitfähigkeit.

Je nach Anteil bzw. Menge an Mikroplastik innerhalb des Trägermediums, wird sich die mindestens eine thermische Eigenschaft einer Probe mit Mikroplastik (oder einem höheren Anteil an Mikroplastik) sich von einer Probe unterscheiden, in welcher kein Mikroplastik (oder ein geringerer Anteil an Mikroplastik vorliegt). Anhand einer Bestimmung einer Amplitude und/oder Phase der Temperaturantwort lässt sich, wie obig erläutert, vorteilhaft auf die mindestens eine thermische Eigenschaft der Probe bzw. den Anteil an Mikroplastik in der Probe schließen.

Die Unterscheidung in mindestens einer thermischen Eigenschaft meint bevorzugt, dass sich das Mikroplastik infolge einer Temperaturänderung durch das Heizelement in mindestens einer Eigenschaft anders verhält als das Trägermedium. Weiterhin kann es bevorzugt sein, dass zusätzlich zu einer Unterscheidung in der mindestens einen thermischen Eigenschaft auch eine oder mehrere andere thermische Eigenschaften zwischen dem Trägermedium und dem Mikroplastik sich ähneln oder im Wesentlichen gleich sind.

In einer weiteren bevorzugten Ausführungsform ist das Verfahren dadurch gekennzeichnet, dass das Trägermedium durch eine Flüssigkeit, bevorzugt Wasser, besonders bevorzugt Meerwasser, Seewasser, Flusswasser, Abwasser oder Trinkwasser gebildet wird.

Es ist bekannt, dass Mikroplastik über verschiedene Wege in die Umwelt und damit in den natürlichen Wasserkreislauf gelangen kann. Dies geschieht insbesondere durch Produkte wie Kosmetika und Textilien über das Abwasser, durch Plastikmüll in Gewässern und Ozeanen, durch Einträge von Industrie und Gewerbe in Gewässer und/oder durch die Luft.

Ferner ist Mikroplastik mittlerweile in vielen Bereichen der Umwelt nachweisbar. Die damit verbundenen Effekte auf die Gesundheit von Mensch, Tier und Ökosysteme sind Gegenstand aktueller Forschung. Die Studienlagen deuten darauf hin, dass eine Gesundheitsgefährdung für Menschen und Tieren sowie auch das Ökosystem durch Mikroplastik vorliegt. Insofern ist man bestrebt, eine zuverlässige Detektion von Mikroplastik in verschiedensten Bereichen sicherstellen zu können.

Mikroplastik kann sich beispielsweise aus Kläranlagen, Waschvorgängen, Plastikmüll, Witterungsprozesse an bereits vorhandenem Plastik ergeben. Dadurch, dass sich beispielsweise Mikroplastik in Kläranlagen befinden kann, kann das dazu führen, dass sich Mikroplastik auch im Klärschlamm befindet, weil die Kläranlagen infolge ihres Betriebs Partikel an Mikroplastik aus dem Trinkwasser lösen. Eine Verringerung von Mikroplastik in Trinkwasser resultiert hierdurch, jedoch ist beispielsweise in Klärschlamm umso mehr Mikroplastik enthalten. Infolgedessen kann über diesen Klärschlamm Mikroplastik im Dünger auch auf Felder und auf diesem Weg in Böden gelangen. Vom Boden kann Mikroplastik beispielsweise durch Hochwasser in Meere und/oder Flüsse geschwemmt werden.

Es ist daher erstrebenswert in verschiedensten Bereichen Proben, wie Meerwasser, Seewasser, Flusswasser, Abwasser, Klärschlamm oder Trinkwasser auf deren möglichen Gehalt an zu überwachen. Mittels des Verfahrens gelingt dies besonders optimal, da insbesondere eine einfache und schnelle Vor-Ort-Analyse für die Proben erfolgen kann.

In einer weiteren bevorzugten Ausführungsform ist das Verfahren dadurch gekennzeichnet, dass das Ansteuerungssignal genau eine oder mehrere Frequenzen umfasst und/oder eine Auswertung des Sensorsignals bei genau einer Frequenz oder bei mehreren Frequenzen erfolgt.

Mithin kann die Steuerung des Heizelementes über eine oder mehrere Frequenzen erfolgen. Entsprechend kann auch die Temperaturantwort von einer oder mehreren Frequenzen abhängig sein. Demzufolge kann auch die Auswertung der Temperaturantwort bei einer oder mehreren Frequenzen erfolgen. Es kann bevorzugt sein, dass die Ansteuerung bei einer einzigen Frequenz erfolgt und die Auswertung der Temperaturantwort ebenfalls bei einer einzigen Frequenz stattfindet. Die Frequenzen bei einer einzigen Frequenz des Ansteuerungssignals des Heizelementes und der über die Sensorkomponente erfassbare Temperaturantwort können im Wesentlichen gleich oder unterschiedlich sein.

Begriffe wie im Wesentlichen, ungefähr, etwa, ca. etc. beschreiben bevorzugt einen Toleranzbereich von weniger als $\pm$ 20 %, bevorzugt weniger als $\pm$ 10 %, noch stärker bevorzugt weniger als $\pm$ 5 % und insbesondere weniger als $\pm$ 1 %. Angaben von im Wesentlichen, ungefähr, etwa, ca. etc. offenbaren und umfassen stets auch den exakten genannten Wert.

Ferner kann es bevorzugt sein, dass die Temperaturantwort mindestens eine erste Frequenz und eine zweite Frequenz umfasst, wobei die erste Frequenz kleiner ist als die zweite Frequenz und eine Zuordnung hinsichtlich einer thermischen Eigenschaft, vorzugsweise einer Wärmeleitfähigkeit, erlaubt.

Die oszillierende Ansteuerung des Heizelementes führt dazu, dass die Temperaturantwort ebenfalls ein oszillierendes Signal ist. Hierbei kann die Tempertaturantwort eine oder mehrere Frequenzen aufweisen, d. h. insbesondere auch eine erste Frequenz und eine zweite Frequenz. Die erste Frequenz und zweite Frequenz bilden mithin Frequenzanteile der Temperaturantwort. Vorzugsweise ist die erste Frequenz kleiner als die zweite Frequenz.

Insbesondere können sich die erste Frequenz und die zweite Frequenz um einen Faktor von mindestens 2, 3, 4, 5, 6, 7, 8 oder mehr unterscheiden. Die geringere Frequenz, d. h. die erste Frequenz, kann vorzugsweise eine Zuordnung einer thermischen Eigenschaft der Probe, beispielsweise einer Wärmeleitfähigkeit, ermöglichen. Vorzugsweise kann in dem Bereich der ersten Frequenz das Messsignal im Wesentlichen von der gewählten mindestens einen thermischen Eigenschaft (beispielsweise einer Wärmeleitfähigkeit) abhängen.

Für eine erste Frequenz, welche besonders niedrig ausfällt und beispielsweise im Wesentlichen einem konstanten Anteil der Temperaturantwort (bei 0 Hz) entspricht, kann bevorzugt die Temperaturantwort vorzugsweise eine Abhängigkeit von der Wärmeleitfähigkeit aufweisen. Die Wärmeleitfähigkeit stellt dabei bevorzugt eine thermische Eigenschaft dar, welche auf einfache Weise Rückschlüsse auf ein Vorliegen bzw. einen Gesamtgehalt von Mikroplastik in der Probe ermöglicht. Der Rückschluss auf das Mikroplastik über die Wärmeleitfähigkeit ist dahingehend einfach umzusetzen, dass sich die Wärmeleitfähigkeit der Probe sich im Wesentlichen über die Wärmeleitfähigkeiten des Trägermediums und des Mikroplastiks zusammensetzt. Die Wärmeleitfähigkeiten der einzelnen Anteile des Mikroplastiks und der Probe sind bekannt (siehe obige Tabelle) und können entsprechend berücksichtigt werden. Zudem weist Mikroplastik insbesondere in Bezug auf eine Wärmeleitfähigkeit zum Teil deutliche Unterschiede gegenüber Wasser auf, indem die Werte lediglich ein Drittel bis die Hälfte betragen.

Insofern stellt eine Auswertung der Temperaturantwort bei einer ersten (niedrigen) Frequenz (vorzugsweise von nahezu 0 Hz) ein weiteres Beispiel eines Mittels dar, um eine thermische Eigenschaft, vorzugsweise eine Wärmeleitfähigkeit, zu ermitteln, sodass die ermittelte thermische Eigenschaft für die Detektion des Mikroplastiks in der Probe genutzt und berücksichtigt werden kann.

Vorzugsweise hängt die Temperaturantwort bei einer zweiten Frequenz, welche höher ist als die erste Frequenz, nicht oder nicht nur von der mindestens einen thermischen Eigenschaft (wie einer Wärmeleitfähigkeit ab), sondern zudem insbesondere auch von einer weiteren Größe, wie z. B. einer weiteren thermischen Eigenschaft oder externen Bedingungen wie einem Druck und/oder die Dichte. Die Temperaturantwort bei einer zweiten (höheren) Frequenz kann insbesondere einer Temperaturantwort bei der Frequenz der Ansteuerung des Heizelementes entsprechen, mithin einem sogenannten 1-Omega-Signal. Ebenso kann die Temperaturantwort bei vorzugsweise ganzzahlig höheren Vielfachen der Ansteuerungsfrequenz ausgewertet werden.

Durch eine Bestimmung der Temperaturantwort bei einer ersten und zweiten Frequenz, wobei die Temperaturantwort bei der ersten Frequenz im Wesentlichen von mindestens eine ersten thermischen Eigenschaft (z. B. einer Wärmeleitfähigkeit abhängt), während die Temperaturantwort bei der zweiten Frequenz eine Abhängigkeit von einer weiteren (zweiten) thermischen Eigenschaft aufweist, kann ein besonders umfangreiche Auswertung des Mikroplastiks erfolgen, das sich in der Probe befindet, da mehrere Parameter berücksichtigt werden. Insbesondere können auf diese Weise auch Aussagen über eine Zusammensetzung des Mikroplastik erhalten werden, da durch eine Bestimmung der Temperaturantwort bei verschieden Frequenzen unterschiedliche thermische Eigenschaften des Mikroplastik geprobt werden und somit eine Detektion des Anteils bestimmter Polymere des Mikroplastiks anhand deren thermischen Fingerabdrucks erfolgen kann.

Hierbei kann es bevorzugt sein, dass eine Bestimmung der Temperaturantwort nicht nur bei einer ersten und zweiten Frequenz, sondern bei einer Vielzahl von weiteren Frequenzen erfolgen kann. Insbesondere im letzteren Fall ist es möglich, durch einen Frequenzscan ein Spektrum einer frequenzabhängigen Temperaturantwort zu bestimmen. Ein Frequenzscan bezeichnet bevorzugt die Ansteuerung des Heizelementes und das Auslesen einer Temperaturantwort über mehrere Frequenzen innerhalb eines Frequenzbereiches, beispielsweise von 10 mHz bis 100 kHz, bevorzugt 1 Hz bis 10 kHz. Die oszillierende Ansteuerung kann dabei bevorzugt eine konstante Amplitude aufweisen, wobei lediglich die Frequenz erhöht wird. Durch einen entsprechenden Frequenzscan lassen sich vorteilhaft eine Temperaturantwort, insbesondere deren Amplitude und/oder Phasenbeziehung zum anregenden Signal, über breiten Frequenzbereich bestimmen, sodass ein präziser thermischer Fingerabdruck der Probe bzw. des darin potentiell erhaltenen Mikroplastik erhalten werden kann.

Eine der mehreren Frequenzen zur Bestimmung der Temperaturantwort, kann einen Wert von im Wesentlichen 0 Hz aufweisen, wobei andere Frequenzen einen Wert von größer 0 Hz oder bei 1-OMEGA, 2-OMEGA oder 3-OMEGA aufweisen.

Der Bereich von im Wesentlichen 0 Hz wird vorzugsweise auch als Gleichstromsignal oder DC-Anteil bezeichnet. Der Messbereich entspricht vorzugsweise einem zeitlich konstanten Anteil der Temperaturantwort bei einer oszillierenden Ansteuerung des Heizelements. Das Signal kann auch als 0-OMEGMA oder 0-Omega-Signal bezeichnet werden. Die Bezeichnungen 1-OMEGA, 2-OMEGA und 3-OMEGA der Temperaturantwort bezeichnen bevorzugt Vielfache der Frequenzen der oszillierenden Ansteuerung des Heizelementes. Mithin beschreiben die OMEGA-Signale (oder Omega-Signale) vorzugsweise harmonischen Anteile der Temperaturantwort. Wird beispielsweise das Heizelement sinusförmig mit f = 100 Hz mit einer Amplitude +/-5 V (Volt) angeregt, zeigt die Temperaturantwort auch harmonische Signale höherer Ordnung. Das 2-Omega-Signal beschreibt dabei die Temperaturantwort bei f = 200 Hz, das 3-Omega-Signal bei f = 300 Hz usw.

Bevorzugt erfolgt eine Auswertung der Tempertaturantwort bei einem 0-Omega-Signal und (mindestens) einem Omega-Signal für höhere Frequenzen. Eine Auswertung bei einem 0-Omega-Signal und/oder (mindestens) einem Omega-Signal für höhere Frequenzen kann vorzugsweise dabei für eine Ansteuerung mittels unterschiedlicher Frequenzen im Weg eines Frequenzscans erfolgen, um ein besonders aussagekräftiges Ergebnis zu erhalten.

Ebenso kann es bevorzugt sein, beispielsweise anhand Messreihen mit Kalibrationsproben umfassend Mikroplastik mit bekannter Zusammensetzung und/oder Konzentration bevorzugte Frequenzen für eine oszillierende Ansteuerung des Heizelementes festzulegen, bei denen eine besonders sensitive Detektion der Zusammensetzung des Mikroplastiks möglich ist. Hierdurch können beispielsweise eine oder mehrere Frequenzen für eine Ansteuerung und/oder Auswertung der Temperaturantwort für ein bestimmtes Polymer und/oder eine bestimmte Polymerzusammensetzung des Mikroplastiks festgelegt werden, welche eine zuverlässige Detektion ermöglicht. Gegenüber einem umfangreicheren Frequenzscan kann hierdurch eine zügige Detektion mit geringerem Mess- und Datenaufwand realisiert werden.

In einer weiteren bevorzugten Ausführungsform ist das Verfahren dadurch gekennzeichnet, dass das Ansteuerungssignal einen ersten Frequenzbereich und einen zweiten Frequenzbereich umfasst, wobei bevorzugt der zweite Frequenzbereich eine Mindestfrequenz von 1 kHz umfasst und bei der Auswertung des zweiten Frequenzbereiches eine Messung der elektrischen Impedanz erfolgt.

Durch die bevorzugte zusätzliche Ansteuerung mit einem zweiten Frequenzbereich mit einer Mindestfrequenz von 1 kHz, vorzugsweise 10 kHz, 100 kHz oder mehr kann vorteilhaft neben einer thermischen Analyse der Probe gleichzeitig eine elektrische Analyse im Sinne einer Impedanzspektroskopie erfolgen. Hierdurch kann vorteilhafterweise eine noch präzisere Erfassung und Analyse des Mikroplastiks erreicht werden.

Der erste Frequenzbereich bezeichnet bevorzugten denjenigen Frequenzbereich, bei dem, wie beschrieben, eine Detektion von Mikroplastik anhand dessen Einfluss auf die thermischen Eigenschaften der Probe erfolgt. Der erste Frequenzbereich kann eine oder mehrere Frequenzen oder auch ein Frequenzspektrum umfassen.

Der zweite Frequenzbereich kann ebenfalls eine oder mehrere Frequenzen umfassen. Allerdings ist der zweite Frequenzbereich durch eine Mindestfrequenz gekennzeichnet, bei der eine Abhängigkeit der Temperaturantwort von einer thermischen Eigenschaft nicht mehr oder nur noch in einem vernachlässigbaren Umfang vorliegt. Bevorzugt weist der zweite Frequenzbereich eine Mindestfrequenz von mehr als 1 kHz, 10 kHz oder auch 100 kHz auf. Vorzugsweise liegt der zweite Frequenzbereich oberhalb einer Grenzfrequenz des thermischen Sensors entspricht.

Die Grenzfrequenz entspricht bevorzugt einer charakteristischen Frequenz, bei der eine Amplitude der frequenzabhängigen Temperaturantwort abfällt, insbesondere auf einen zuvor festgelegten Wert in Abhängigkeit vom Kontext der Messung. Die Grenzfrequenz kann bevorzugt die Frequenz sein, ab der die Temperaturantwort auf das ca. 1/√2 fache der maximalen Temperaturantwort gesunken ist. Letztere bevorzugte Option zur Festlegung der Grenzfrequenz entspricht vorzugsweise einem Abfall von ca. 70 % eines maximalen Wertes der Temperaturantwort.

Oberhalb der Grenzfrequenz ist eine Messung thermischer Eigenschaften mit nur verminderter Sensitivität möglich. Die Grenzfrequenz bezeichnet mithin messtechnisch insbesondere eine maximale Frequenz, mit der das Heizelement (noch) angesteuert werden kann und eine ausreichende Amplitude einer Temperarturantwort messbar ist.

Allerdings ermöglicht die Ansteuerung des Heizelementes mit Frequenzen in einem zweiten Frequenzbereich oberhalb der Grenzfrequenz eine vorteilhafte, zusätzliche Aufnahme elektrischer Eigenschaften der Probe. Analog zu einer Impedanzspektroskopie wird dabei vorzugsweise ein Wechselstromwiderstand der Probe, die elektrische Impedanz, in Abhängigkeit von der Frequenz des Wechselstroms bestimmt. Dazu wird die elektrische Impedanz bei einer oder mehreren Frequenzen im zweiten Frequenzbereich gemessen. Das Heizelement kann hierbei als eine erste Elektrode fungieren, während die Sensorkomponente eine zweite Elektrode aufweist. Da das Mikroplastik in der Regel vom Trägermedium abweichende elektrische Eigenschaften aufweist, kann in Abhängigkeit des Anteils an Mikroplastik eine unterschiedliche elektrische Impedanz gemessen werden. Vorzugsweise ändert sich der Realteil der elektrischen Impedanz bei niedrigen Frequenzen proportional zum Volumen von Mikroplastikpartikel in der Probe.

Für die Aufnahme eines Impedanzspektrums werden die erste Elektrode und die zweite Elektrode eingesetzt, um auf Basis der oszillierenden Ansteuerung einen Wechselstrom zwischen diesen Elektroden bereitzustellen. Dabei kann, analog wie zur thermischen Messung, auf Basis einer Vergleichsmessung in Abhängigkeit von der Abweichung der elektrischen Impedanz der Probe ein Rückschluss auf weitere Eigenschaften des Mikroplastiks ermöglicht wird, sodass eine nähere Charakterisierung des Mikroplastiks gewährleistet wird. Anhand einer Auswertung des Real- und Imaginärteils der elektrischen Impedanz lassen sich Rückschlüsse das Vorhandensein von Mikroplastik ziehen (vgl. auch Beckett et al. 2021 und Gongi et al. 2022). Hierdurch können nähere Charakteristika des Mikroplastiks bestimmt werden, beispielsweise die Dimensionierung des Mikroplastiks und/oder die geometrische Ausgestaltung des Mikroplastiks in der Probe.

Mithin kann vorteilhaft der thermische Sensor auch als elektrischer Sensor fungieren und insbesondere dazu genutzt werden, zusätzlich zu einer thermischen Analyse eine elektrische Analyse der Probe über die elektrische Impedanz vorzunehmen, um eine weitere Charakterisierung des Mikroplastiks vorzunehmen.

In einer weiteren bevorzugten Ausführungsform ist das Verfahren dadurch gekennzeichnet, dass für das In-Kontakt-Bringen der Probe mit dem Heizelement die Probe auf den thermischen Sensor aufgebracht wird oder der thermische Sensor in die Probe eingebracht wird.

Das Aufbringen der Probe auf den thermischen Sensor kann beispielsweise in Tropfenform vorzugsweise über ein Pipettiervorgang erfolgen. Beim einem Pipettiervorgang wird bevorzugt die Probe über eine Pipette auf den thermischen Sensor aufgebracht, um die Probe über die oszillierende Ansteuerung des Heizelementes zu erwärmen und über die Sensorkomponente eine Temperaturantwort zu erfassen. Hierbei wird kann mithin vorteilhaft eine genau dosierte Menge der Probe auf den thermischen Sensor aufgebracht werden. Beispielhafte Pipetten, die eingesetzt werden können, sind ausgewählt aus einer Gruppe umfassend eine Tropfpipette, Mikroliterpipette, Milliliterpipette, Multipipette, offene Pipette, Kolbenhubpipette und/oder Mehrkanalpipette, ohne hierauf beschränkt zu sein. Das Volumen der Probe bzw. des Probentropfens kann in Abhängigkeit der Ausdehnung des thermischen Sensors und/oder bevorzugt einzustellender Eindringtiefen ausgewählt werden, beispielsweise um eine thermische Messung über einen überwiegenden Teil der aufgebrachten Probe zu gewährleisten.

Es kann auch bevorzugt sein, dass der thermische Sensor in die Probe eingebracht wird. Dazu kann der thermische Sensor beispielsweise in ein Behältnis, das die Probe enthält, eingetaucht werden oder in einem Behältnis installiert vorliegen, in dem die Probe enthalten ist oder welches die Probe durchströmt. Es kann auch bevorzugt sein, dass die Probe direkt in die Probe eingetaucht wird, d. h. an der zu untersuchenden Stelle, dessen Inhalt einem bevorzugten Trägermedium der Probe entspricht, beispielsweise ein Eintauchen direkt in einen See oder Fluss oder Meer. Das Einbringen des thermischen Sensors in die Probe ist besonders einfach umzusetzen und benötigt keine oder nur sehr wenige Hilfsmittel, sodass mit einem besonders geringen Aufwand verbunden ist.

In einer weiteren bevorzugten Ausführungsform ist das Verfahren dadurch gekennzeichnet, dass zur Detektion des Mikroplastiks in der Probe eine Konzentration des Mikroplastiks erhöht wird.

Vorteilhaft kann hierdurch die Genauigkeit der durch die Temperaturantwort bestimmbaren Eigenschaften des Mikroplastiks verbessert werden. Dies ergibt sich insbesondere durch einen höheren Einfluss des Mikroplastiks auf die thermischen Eigenschaften der Probe, im Vergleich zu einer Situation, bei der das Mikroplastik mit einer geringeren Konzentration in der Probe enthalten ist. Unter Abschätzung oder Kenntnis des Faktors der Erhöhung der Konzentration des Mikroplastiks in der Probe kann auf einfache Weise auf die ursprüngliche Menge oder Konzentration des Mikroplastiks in der Probe geschlossen werden.

Für eine Erhöhung der Konzentration des Mikroplastiks in der Probe können verschiedene Verfahrensschritte vorgenommen werden.

In einer bevorzugten Ausführungsform erfolgt eine Erhöhung der Konzentration des Mikroplastiks in der Probe durch eine Verdampfung, Verdunstung, eine Filterung und/oder eine Auftrennung des Mikroplastiks von der Probe.

Die genannten bevorzugten Methoden sind einerseits einfach in das bestehende Verfahren zu implementieren und haben sich zudem bewährt, um eine Konzentrationserhöhung des Mikroplastiks zu bewirken und damit eine effektivere Detektion des Mikroplastiks durchführen zu können.

Eine Auftrennung des Mikroplastiks von dem Trägermedium der Probe kann beispielsweise durch eine Zentrifuge oder eine ähnliche Vorrichtung ausgeführt werden. In Abhängigkeit der Dichte des Mikroplastiks im Vergleich zum Trägermedium kann eine Erhöhung der Konzentration des Mikroplastiks vorzugsweise sowohl in einem Bereich der Zentrifuge erfolgen an dem höhere Zentrifugalkräfte wirken (z.B. einem radial äußeren Bereich) als auch in einem Bereich der Zentrifuge erfolgen an dem geringere Zentrifugalkräfte wirken (z.B. einem radial inneren Bereich). Durch gezielte Entnahme einer Teilmenge der Probe aus einem Bereich der Zentrifuge, in dem ein höherer Anteil des Mikroplastiks zu erwarten ist, kann in dieser entnommenen (Teil-)Probe eine höhere Konzentration des Mikroplastiks erreicht werden.

In einer weiteren bevorzugten Ausführungsform ist das Verfahren dadurch gekennzeichnet, dass ein Trichter bereitgestellt wird, durch den die Probe umfassend das Mikroplastik zum thermischen Sensor geführt werden kann.

Ein Trichter bezeichnet bevorzugt eine Komponente, die konisch geformt ist und mindestens einen Abschnitt aufweist, der gegenüber weiteren Abschnitten verjüngt bzw. verengt ist. Mithin umfasst ein Trichter mindestens zwei Abschnitte, wobei ein erster Abschnitt gegenüber dem zweiten Abschnitt verjüngt ist. Daher kann der erste Abschnitt auch als verjüngter Abschnitt eines Trichters bezeichnet werden.

Bevorzugt ist der Trichter derart angebracht, dass der verjüngte Abschnitt zum Heizelement und/oder zur Sensorkomponente des thermischen Sensors ragt.

Der verjüngte Abschnitt eines Trichters kann bevorzugt in Richtung des Gravitationsfeldes positioniert sein, was insbesondere dann vorteilhaft ist, wenn die Mikroplastikpartikel eine höhere Dichte haben als das Trägermedium der Probe. Umgekehrt kann es bevorzugt sein, dass der verjüngte Abschnitt und dementsprechend auch der thermische Sensor entgegen der Gravitationskraft bzw. der Schwerkraft gerichtet ist, wenn die Mikroplastikpartikel eine geringere Dichte aufweisen als das Trägermedium der Probe. Vorteilhaft kann hierdurch eine Konzentration des Mikroplastiks in einer Nähe zum thermischen Sensor erreicht werden, um die Genauigkeit der Detektion des Mikroplastiks in der Probe weiter zu verbessern.

Eine Filterung kann bevorzugt durch den Einsatz eines Filters ermöglicht werden, der Öffnungen umfasst, welche eine zuvor festgelegte Dimensionierung haben, sodass Mikroplastikpartikel mit gewünschter Größe durch den Filter hindurchgelangen oder nicht durch den Filter gelangen. So kann es beispielsweise bevorzugt sein, Filter mit hinreichend kleinen Öffnungen bereitzustellen, welche gezielt Mikroplastik nicht passieren lassen. Der Anteil der Probe, welche den Filter passiert, wird in dem Fall eine geringere Konzentration von Mikroplastik aufweisen, als ein Anteil der Probe, welche den Filter nicht passiert, sodass ebenfalls eine (Teil-)Probe mit erhöhter Konzentration des Mikroplastiks für eine Messung bereitgestellt werden kann. Ebenso ist es denkbar, Filters einzusetzen, den Mikroplastik gezielt passieren kann, sodass die zu messende (Teil-)Probe frei von anderen Verunreinigungen ist.

Eine Verdampfung oder Verdunstung zur Erhöhung der Konzentration des Mikroplastik kann bevorzugt durch eine entsprechende Temperaturerhöhung über ein separates Heizelement oder das Heizelement des thermischen Sensors bewirkt werden. Beim Verdunsten erfolgt vorzugsweise nicht zwangsläufig ein Sieden des bevorzugten Trägermediums in der Probe, während beim Verdampfen das Trägermedium siedet. Der Faktor, um den die Konzentration des Mikroplastiks in der Probe durch ein Verdunsten oder Verdampfen erfolgt, kann sowohl durch die eingebrachte Wärmemenge und Zeit vorgegeben werden, sodass eine besonders präzise kontrollierte Erhöhung der Konzentration des Mikroplastiks ermöglicht wird.

In einer bevorzugten Ausführungsform kann das Verfahren dadurch gekennzeichnet sein, dass ein Trägermedium der Probe nahezu vollständig verdampft wird, bevorzugt durch das oszillierende Ansteuerungssignal auf das Heizelement, sodass die Detektion des Mikroplastiks in einem im Wesentlichen trockenen Aggregatzustand der Probe erfolgt.

In einer bevorzugten Ausführungsform kann das Verfahren dadurch gekennzeichnet sein, dass eine Energie zur Verdampfung oder Verdunstung eines Trägermediums in der Probe erfasst wird, wobei vorzugsweise die Energie zur Verdampfung oder Verdunstung zusätzlich bei der Detektion der Mikroplastik in der Probe berücksichtigt wird. So ist es bekannt, dass Mikroplastik die Verdunstungsdynamik eines Trägermediums verändern kann. Eine Messung der notwendigen Energie pro Menge eines Trägermediums kann somit vorteilhaft als zusätzlicher Messparameter genutzt werden, um Aussagen über eine Menge und/oder Konzentration des Mikroplastik in der Probe zu treffen.

Bevorzugt kann zu dem Zweck wie obig beschrieben eine Verdampfung oder Verdunstung zur Erhöhung der Konzentration des Mikroplastik durch eine entsprechende Temperaturerhöhung über ein separates Heizelement oder das Heizelement des thermischen Sensors bewirkt werden. Vorzugsweise wird bereits während der Verdampfung oder Verdunstung die Temperaturantwort des thermischen Sensors erfasst. Eine vollständige Verdampfung oder Verdunstung des Trägermediums kann vorzugsweise anhand einer Sprungantwort der Sensorkomponente festgestellt werden, da bei der vollständige Verdampfung oder Verdunstung das Heizelement und/oder die Sensorkomponente plötzlich anstelle des Trägermediums, eine Umgebungsluft mit deutlich anderen thermischen Eigenschaften kontaktiert. Über die Leistung des Heizelementes und des Zeitraums bis zur vollständigen Verdunstung oder Verdampfung des Trägermediums kann vorzugsweise die Energie bestimmt werden, welche notwendig ist, um das Trägermedium zu verdampfen oder zu verdunsten.

In einer weiteren bevorzugten Ausführungsform ist das Verfahren dadurch gekennzeichnet, dass eine differentielle Messung mittels zweier thermischer Sensoren ausgeführt wird.

Eine differentielle Messung umfasst vorzugsweise die Bildung eines Kombinationssignales. Ein Kombinationssignal umfasst bevorzugt ein Messsignal, welches von den jeweiligen Temperaturantworten von mindestens zwei Sensorkomponenten der beiden zwei thermischen Sensoren gebildet wird. Ein Kombinationssignal für eine differentielle Messung kann durch eine oder mehrere der Rechenoperationen von den mindestens zwei Temperaturantworten gebildet werden. Die Rechenoperationen sind bevorzugt ausgewählt aus einer Gruppe umfassend Subtraktion, Addition, Multiplikation und/oder Division.

Durch die Bildung eines Kombinationssignals, d. h. bei der Durchführung einer differentiellen Messung, kann vorteilhaft eine besonders präzise Messung der Probe erfolgen, welche beispielsweise eine Kompensation für globale Temperaturschwankungen und/oder einer parasitären Wärmeleitung über die Membran ermöglicht.

Dazu kann es bevorzugt sein, über das Kombinationssignal weitere mathematische Operationen vorzunehmen, um auf Mikroplastik in der Probe schließen zu können, beispielsweise eine schnelle Fourier-Transformation (englisch: *fast fouriertransform).*

Für die zwei oder mehr Sensorkomponenten können bevorzugt grundsätzlich sowohl Gleichanteile einer Temperaturantwort (0-Omega-Signal) oder aber auch mehrere harmonische Wechselanteile (1-Omega-Signal, 2-Omega-Signal, 3-Omega-Signal etc.) ausgewertet werden.

Insofern erlaubt die Bereitstellung einer Mehrzahl an thermischen Sensoren für eine differentielle Messung eine besonders präzise Messung, welche unterschiedlichste Fehler- bzw. Störgrößen (wie z. B. Temperaturschwankungen des thermischen Sensors, Schwankungen der Probenzusammensetzung etc.) herausrechnen bzw. berücksichtigen können.

In einer bevorzugten Ausführungsform umfasst die differentielle Messung eine Messung zwischen der Probe und einer Referenzprobe, eine Messung zwischen zwei unterschiedlichen Positionen des Mikroplastiks innerhalb der Probe oder eine Messung zwischen zwei unterschiedlichen Zeitpunkten.

Im Rahmen einer differentiellen Messung bezeichnet bevorzugt eine Referenzprobe eine Probe, welche ein identisches oder ähnliches Trägermedium, wie eine zu messende Probe umfasst, wobei die Referenzprobe vorzugsweise kein Mikroplastik oder im Wesentlichen kein Mikroplastik enthält. Im Sinne der Erfindung kann eine zu messende Probe auch als Messprobe bezeichnet werden.

Insofern können mittels einer differentiellen Messung die Temperaturantworten verglichen werden, die bei einer Referenzprobe (ohne Mikroplastik) und einer (Mess-)Probe (mit Mikroplastik) erhalten werden, um das Mikroplastik zu detektieren. Beispielsweise kann es bevorzugt sein für Meerwasser als eine (Mess-)Probe eine Referenzprobe bereitzustellen, welche ebenfalls als Trägermedium Meerwasser umfasst, jedoch nachweislich kein oder nur einen geringen Anteil an Mikroplastik. Ein ähnliches Trägermedium kann jedoch auch bedeuten, dass beispielsweise anstelle von Meerwasser, Wasser mit einem definierten Salzanteil, destilliertes Wasser oder aber ein anderes Wasser genutzt wird.

Da die Referenzprobe - bis auf einen möglichen Anteil an Mikroplastik - vorzugsweise der (Mess-)probe ähnelt, sind etwaige Differenzen der jeweiligen Temperaturantworten besonders spezifisch für ein potentielles Vorhandensein des Mikroplastiks. Die differentielle Messmethode erlaubt somit unter Verwendung von lediglich zwei thermischen Sensoren sowohl eine präzisere, sensitivere Messung als auch eine umfassendere Analyse des Mikroplastiks (beispielsweise im Hinblick auf eine Zusammensetzung des Mikroplastiks).

Bei einer differentiellen Messung, bei der mindestens zwei thermische Sensoren an unterschiedlichen Positionen innerhalb der Probe eingebracht sind, können bevorzugt Gravitationseffekte oder andere Effekte, welche zu einer unterschiedlichen Konzentration des Mikroplastiks innerhalb der Probe führen können berücksichtigt und im Rahmen der Bestimmung des Mikroplastiks ausgenutzt oder kompensiert werden.

Je nachdem, wie schwer die Partikel sind, können sie sich an bestimmen Positionen innerhalb der Probe eher ansammeln als in anderen Positionen. So werden Partikel des Mikroplastiks, welche schwerer als ein Trägermedium sind, sich verstärkt in einem oberen Bereich der Probe im Vergleich zu einem unteren Bereich der Probe ansammeln. Oben und unten wird in diesem Kontext vorzugsweise anhand der Gravitationsrichtung definiert. Ein oberer Bereich kann beispielsweise eine obere Hälfte, ein oberes Drittel, ein oberes Viertel oder ein oberes Fünftel der Probe meinen, während ein unterer Bereich beispielsweise eine untere Hälfte, ein unteres Drittel, ein unteres Viertel oder ein oberes Fünftel der Probe meinen kann, jeweils bezogen auf ein gedachtes zur Erdoberfläche senkrecht ausgerichtetes Lot.

Durch eine Positionierung der beiden thermischen Sensoren in einem oberen und unteren Bereich, kann bevorzugt einer der thermischen Sensoren als Referenzsensor dienen, in dem eine Temperaturantwort gemessen wird, bei der ein geringerer Anteil an Mikroplastik zu erwarten ist, während der andere Sensor als Messsensor dienen kann, bei dem eine Temperaturantwort gemessen wird, bei der ein höherer Anteil an Mikroplastik zu erwarten ist. Auch in diesem Fall lässt sich durch eine differentielle Messung bzw. eines daraus ableitbaren Kombinationssignals eine besonders sensitive Detektion und/oder aussagekräftige Charakterisierung des Mikroplastiks gewinnen. Eine räumlich unterschiedliche Positionierung kann selbstverständlich auch andere Effekte als Gravitationseffekte berücksichtigt, beispielsweise sofern Strömungen innerhalb einer Probe zu erwartbaren unterschiedlichen Konzentrationen von Mikroplastik in der Probe führen können.

Bei einer differentiellen Messung bei zwei unterschiedlichen Zeitpunkten, in Vorzugsformen auch drei, vier, fünf oder mehr unterschiedlichen Zeitpunkten, werden vorteilhaft ebenfalls Effekte berücksichtigt, welche zu einer globalen oder lokalen Erhöhung oder Erniedrigung einer Konzentration des Mikroplastiks führen können. Beispielsweise kann es bevorzugt sein im Falle eines Verdunstens eines flüssigen Trägermediums, die Temperaturantworten zu zwei, drei, vier oder unterschiedlichen Zeitpunkten zu messen, sodass während der sukzessiven Erhöhung der Konzentration des Mikroplastiks in der Probe zu mehreren Zeitpunkten eine Temperaturantwort bestimmt werden kann. Ebenso kann mittels einer derartigen Messung bei zwei oder mehr unterschiedlichen Zeitpunkten, es in Vorzugsformen auch berücksichtigt werden, dass die Probe sich während des Messzeitraums nicht in einem Gleichgewicht befindet. Beispielsweise kann es bevorzugt sein, eine Probe bereitzustellen, welche aufgrund der Entnahme oder einer entsprechenden Vorbehandlung (z. B. Vortex) eine homogene Verteilung von Mikroplastik aufweisen wird. Nach dem Aufbringen der Probe auf dem thermischen Sensor kann es dazu kommen, dass Mikroplastikpartikel innerhalb der Probe und nach einer bestimmten Zeitspanne nach oben entgegen der Schwerkraftwirkung oder nach unten in Richtung der Schwerkraftwirkung diffundieren. Auch für eine Messung der Temperaturantwort an ein und derselben Position innerhalb der Probe kann aufgrund eines solchen Effektes zu unterschiedlichen Zeitpunkten unterschiedliche Temperaturantworten in Abhängigkeit der gravitationsbedingten Änderung der lokalen Konzentration des Mikroplastik auftreten.

Da die zeitliche Änderung der Temperaturantwort insbesondere von dem Anteil an Mikroplastik innerhalb der Probe abhängt, können auch derartige differentielle Messungen für eine Verbesserung der Sensitivität oder Aussagekraft des Detektionsverfahren genutzt werden.

In einem weiteren Aspekt betrifft die Erfindung einen thermischen Sensor zur Ausführung eines Verfahrens nach dem obig Beschriebenen umfassend ein Heizelement und eine Sensorkomponente, wobei das Heizelement dazu ausgelegt ist, mittels eines Ansteuerungssignals oszillierend angesteuert zu werden und anhand einer Messung einer Temperaturantwort der Sensorkomponente Mikroplastik in einer Probe detektierbar ist.

Der durchschnittliche Fachmann erkennt, dass technische Merkmale, Definitionen und Vorteile von Ausführungsformen, welche im Zusammenhang mit dem obig beschriebenen Verfahren für einen thermischen Sensor offenbart wurden, gleichermaßen auf den erfindungsgemäßen thermischen Sensor zutreffen, und umgekehrt.

Durch den thermischen Sensor kann das erfindungsgemäße Verfahren besonders einfach umgesetzt werden. So erfordert es lediglich den Einsatz eines thermischen Sensors umfassend ein Heizelement und eine Sensorkomponente. Dabei soll das Heizelement mittels eines Ansteuerungssignals oszillierend angesteuert werden und die Temperaturantwort des thermischen Sensors erfasst werden. Mit dem erfindungsgemäßen thermischen Sensor kann somit sowohl auf eine Verwendung von zusätzlichen chemischen Verbrauchskomponenten, wie z. B. Farbstoffen im Falle chemischer Analysen, als auch komplexen Geräten, wie beispielsweise Mikroskope für eine optische Detektion, verzichtet werden.

Stattdessen kann das erfindungsgemäße Verfahren mit einem thermischen Sensor ausgeführt werden. Der thermische Sensor ist bevorzugt mittels MEMS-Technologie ausgeführt. Anders ausgedrückt, basiert der thermische Sensor bevorzugt auf MEMS-Technologie, d.h. bevorzugt, dass der thermische Sensor Strukturen und/oder Komponenten im Mikrometerbereich aufweist und/oder mittels Verfahren der MEMS-Technologie mindestens teilweise hergestellt und/oder verarbeitet wurde. Der Mikrometerbereich im Kontext der MEMS-Technologie meint bevorzugt einen Bereich von ca. 1 - 1000 μm. So kann es beispielsweise bevorzugt sein, dass mindestens eine Komponente des thermischen Sensors, beispielsweise das Heizelement und/oder die Sensorkomponente, eine Dimensionierung im Mikrometerbereich aufweist.

Vorteilhaft kann der thermische Sensor zum einen besonders kompakt ausgestaltet sein und bedarf zum anderen keine chemischen Substanzen, welche eine Laborsetting erfordern. Dies ermöglicht vorteilhaft eine Vor-Ort-Analyse von Proben. Kosten- und zeitsensitive Analysen im Labor sind nicht notwendig. Stattdessen kann der thermische Sensor an verschiedensten Stellen von Interesse vorteilhaft eingesetzt werden, beispielsweise Wasserleitungen, Umweltbereichen und/oder innerhalb von Industrieanlagen. Durch die mögliche Bereitstellung kostengünstiger und kompakter thermischer Sensoren lässt sich eine wirtschaftliche Skalierung erreichen und beispielsweise für eine flächendeckende Überwachung von Mikroplastik verwendet werden. Mittels kommunikationsfähiger thermischer Sensoren können dabei auch onlinefähige Daten zu etwaigen Verschmutzungen durch Mikroplastik in verschiedensten Bereichen gewonnen werden, um hieraus Handlungsstrategien zur Prävention oder Vermeidung abzuleiten.

In einer weiteren bevorzugten Ausführungsform ist der thermische Sensor dadurch gekennzeichnet, dass der thermische Sensor eine elektronische Schaltung aufweist, wobei die elektronische Schaltung dazu konfiguriert ist, das Heizelement oszillierend mit einem Ansteuerungssignal anzusteuern und/oder eine Temperaturantwort des thermischen Sensors auszuwerten, um das Mikroplastik anhand der Temperaturantwort zu detektieren.

Eine elektronische Schaltung kann mithin bevorzugt als eine Recheneinheit fungieren, welche bevorzugt als eine Datenverarbeitungseinheit vorliegt, und eine Verarbeitung von mittels dem Heizelement oder einer Sensorkomponente aufgenommenen Daten vornimmt. Ebenso kann die elektronische Schaltung bevorzugt die Funktionen einer Steuereinheit übernehmen, beispielsweise, um das Heizelement oszillierend anzuregen.

Bevorzugte elektronische Schaltungen umfassen ohne Beschränkung eine integrierte Schaltung (IC), eine anwendungsspezifische integrierte Schaltung (ASIC), eine programmierbare logische Schaltung (PLC), ein Field Programmable Gate Array (FPGA), einen Mikroprozessor, einen Mikrocomputer, eine speicherprogrammierbare Steuerung und/oder eine sonstige elektronische Schaltung, die bevorzugt programmierbar ist. Die elektronische Schaltung kann bevorzugt zudem eine Speichereinheit umfassen. Eine Speichereinheit erlaubt die Sicherung und/oder Zwischenspeicherung von Daten. Nicht beschränkende Beispiele von Speichern, vorzugsweise von Halbleiterspeichern, sind flüchtige Speicher, (RAM)-Speicher oder nicht-flüchtige Speicher, wie ROM-Speicher, EPROM-Speicher, EEPROM-Speicher oder Flash-Speicher und/oder andere Speichertechnologien.

Der Begriff "Recheneinheit" bezieht sich vorzugsweise auf ein beliebiges Gerät oder eine beliebige Einheit, die dazu konfiguriertet werden kann, Rechenoperationen durchzuführen. Bevorzugt ist die Recheneinheit beispielsweise ein Prozessor, ein Prozessorchip, ein Mikroprozessor und/oder ein Mikrocontroller, der vorzugsweise dazu konfiguriert ist, eine Auswertung der Temperaturantwort vorzunehmen. Die Recheneinheit kann auch bevorzugt eine programmierbare Leiterplatte sein. Die Recheneinheit kann auch vorzugsweise ein computerverwendbares oder computerlesbares Medium, wie eine Festplatte, einen Direktzugriffsspeicher (RAM), einen Festwertspeicher (ROM), einen Flash-Speicher usw. umfassen.

Verfahrensschritte zur Bestimmung von Mikroplastik in der Probe, wie hierin beschrieben, werden vorzugsweise von der elektronischen Schaltung bzw. Recheneinheit durchgeführt. Die Formulierung "dazu konfiguriert ist" meint bevorzugt, dass auf der elektronischen Schaltung bzw. Recheneinheit ein Computercode und/oder eine Software installiert ist, um einen Verfahrensschritt durchzuführen, beispielsweise um zu überprüfen, inwiefern eine Änderung einer thermischen Eigenschaft durch das Mikroplastik hervorgerufen wird.

Der Computercode und/oder die Software zur Auswertung der Modulation des Wärmefeldes kann in einer beliebigen Programmiersprache oder einer modellbasierten Entwicklungsumgebung geschrieben sein, z. B. in C/C++, C#, Objective-C, Java, Basic/VisualBasic, MATLAB, Simulink, StateFlow, Lab View, Python und/oder Assembler.

Der Computercode und/oder die Software, welche bevorzugt auf der elektronischen Schaltung oder Recheneinheit installiert ist, um insbesondere eine Auswertung der Temperaturantwort der Sensorkomponente vorzunehmen, können als technische Merkmale betrachtet werden, da eine direkte physische Wirkung des thermischen Sensors, beispielsweise die Zuführung eines Steuersignals für ein Heizelement oder die Erfassung einer Temperaturantwort durch die Sensorkomponente, genutzt wird. Funktionsbeschreibungen des Computercodes und/oder der Software können daher als bevorzugte und definierende Ausführungsformen der Erfindung angesehen werden.

In einer weiteren bevorzugten Ausführungsform ist der thermische Sensor dadurch gekennzeichnet, dass das Heizelement ein elektrisches Heizelement, bevorzugt ein Heizwiderstand ist.

Das Heizelement bezeichnet bevorzugt die Komponente des thermischen Sensors, von der durch Abgabe einer Wärmeenergie die thermische Welle ausgeht. Ein elektrisches Heizelement bezeichnet bevorzugt ein Heizelement, welches in der Lage ist, elektrische Energie in Wärmeenergie umzuwandeln. Die Wärmeenergie wird bei einem elektrischen Heizelement vorzugsweise derart erzeugt, dass ein elektrisch leitfähiges Material verwandt wird, welches von einem elektrischen Strom durchflossen und durch Joulesche Wärme erhitzt wird. Ein Heizwiderstand hat sich hierfür als besonders geeignet erwiesen, der insbesondere metallische Legierungen oder hoch dotiertes Polysilizium umfasst, die auch bei besonders hohen Temperaturen, die sie bereitstellen können, nicht schmelzen und/oder oxidieren.

In einer weiteren bevorzugten Ausführungsform ist der thermische Sensor dadurch gekennzeichnet, dass die Sensorkomponente das Heizelement selbst ist oder die Sensorkomponente einen Temperatursensor umfasst.

In einer weiteren bevorzugten Ausführungsform fungiert das Heizelement selbst als Sensorkomponente, d. h., dass vorzugsweise eine Sensorkomponente durch das Heizelement selbst bereitgestellt werden kann, ohne dass ein Temperatursensor als Sensorkomponente eingesetzt wird. Die Wirkung des Heizelementes als Sensorkomponente kann beispielsweise wie die aus dem Stand der Technik bekannte 3-Omega-Methode ermöglicht werden. Bei der 3-Omega-Methode wird eine thermische Eigenschaft, wie z. B. eine Wärmeleitfähigkeit, bestimmt. Dabei wird ein Heizelement selbst als Temperatursensor verwandt und mit einem oszillierenden Steuerungssignal eingespeist. Durch die eingespeiste Leistung ändert sich die Temperatur des Heizelementes mit der gleichen Frequenz des Ansteuerungssignals. Die Amplitude und die Phasenverschiebung gegenüber der Einspeiseleistung ist abhängig von der Wärmeleitfähigkeit und der Frequenz. Die Temperaturoszillationen führen zu einer Widerstandoszillationen des Heizelementes, welche unter anderem durch eine Widerstandamplitude beschrieben werden kann, die wiederrum abhängig von einem Temperaturkoeffizienten des elektrischen Widerstands des Heizelementes ist. Hieraus lässt sich durch eine Anwendung des ohmschen Gesetzes die Spannung über das Heizelement berechnen, welche eine Komponente mit der 3-fachen Frequenz ($3\omega$) und eine entsprechende Amplitude enthält, die proportional zur Temperaturamplitude des Heizelementes ist.

Der Temperatursensor ist bevorzugt eine Komponente des thermischen Sensors, der in der Lage ist, eine Temperatur zu messen. Vorzugsweise liegt ein Temperatursensor als Sensorkomponente zusätzlich zum Heizelement vor. Es können ein oder mehrere Temperatursensoren vorliegen, beispielsweise 1, 2, 3, 4, 5, 6, 7, 8, 9, 10 oder mehr Temperatursensoren. Eine bevorzugte Anordnung des thermischen Sensors umfasst ein Heizelement, das zwischen zwei Temperatursensoren angebracht ist.

In einer weiteren bevorzugten Ausführungsform ist der Temperatursensor ausgewählt aus einer Gruppe umfassend ein Thermoelement, eine Thermosäule, eine Diode und/oder ein Thermistor.

Ein Thermistor meint bevorzugt ein Bauelement umfassend einen elektrischen Widerstand, dessen Wert sich mit der Temperatur reproduzierbar ändert. Thermistoren unterteilen sich in ihren Temperaturverhalten in Heißleiter und Kaltleiter. Ein Heißleiter weist einen negativen Temperaturkoeffizienten auf und ist in der Lage, elektrischen Strom im heißen Zustand besser zu leiten als im kalten Zustand. Ein Kaltleiter weist einen positiven Temperaturkoeffizienten auf und kann im kalten Zustand besser elektrisch leiten als im heißen Zustand. Im Kontext der Erfindung kann vorzugsweise ein Heißleiter oder ein Kaltleiter als Thermistor verwandt werden. Mittels eines Thermistors lässt sich auf einfache und präzise Weise anhand eines sich ändernden elektrischen Widerstandes eine Temperaturmessung vornehmen.

Mit einem Thermoelement ist bevorzugt eine Anordnung umfassend ein Paar elektrisch leitfähiger Materialien gemeint, die an einem Ende miteinander verbunden sind und aufgrund des thermoelektrischen Effektes einen Rückschluss auf die gemessene Temperatur zulassen. Dabei wird elektrische Energie bei einer Temperaturdifferenz entlang der Anordnung bereitgestellt. Eine Thermosäule bezeichnet ein Element, welches mehrere Thermoelemente aufweist. Die Thermoelemente der Thermosäule sind bevorzugt elektrisch in Reihe und thermisch parallelgeschaltet.

Die Messstelle des Thermoelements oder der Thermosäule wird als Heißstelle, heißes Ende oder durch die englischen Begriffe *hot end* oder *hot junction* bezeichnet und bildet ein Ende eines Thermoelements. Das andere Ende, welches analog als Kaltstelle, kaltes Ende oder durch die englischen Begriffe *cold end* oder *cold junction* bezeichnet wird, bezeichnet eine als Referenz dienende Vergleichsstelle, um einen Temperaturunterschied feststellen zu können. Vorzugsweise wird eine elektronische Schaltung und/oder eine Recheneinheit zur Verarbeitung der Temperaturmessung mit der *cold junction* verbunden.

Auch eine Diode kann als Temperatursensor und damit als eine bevorzugte Sensorkomponente fungieren. Hierbei kann beispielsweise ausgenutzt werden, dass eine Durchlassspannung einer Diode sich mit der Temperatur im Wesentlichen linear ändert. Umso höher die Temperatur ist, desto geringer ist die Durchlassspannung und umgekehrt. Dementsprechend kann anhand der Änderung einer Durchlassspannung Rückschlüsse auf eine Änderung der Temperatur gezogen werden.

In einer weiteren bevorzugten Ausführungsform ist der thermische Sensor dadurch gekennzeichnet, dass der thermische Sensor eine Trägerstruktur umfasst, welche eine Kavität aufweist, oberhalb derer sich eine Trägermembran erstreckt, wobei das Heizelement und/oder die Sensorkomponente auf der Trägermembran positioniert sind.

Die Trägermembran stellt bevorzugt eine Komponente dar, welche der Positionierung des thermischen Sensors dient. Die Trägermembran erstreckt sich entlang einer Trägerstruktur oberhalb bzw. über eine Kavität. Die Trägermembran ist bevorzugt flächig ausgestaltet, d. h., dass sie vorzugsweise eine um ein Vielfaches höhere Länge und/oder Breite als Dicke aufweist. Die Dicke bezeichnet hierbei eine Erstreckung entlang einer Achse, welche im Wesentlichen orthogonal zu einer Länge und/oder Breite der Trägermembran steht. So kann die Länge und/oder Breite um einen Faktor 1,5, 2, 5, 10, 100, 1 000 oder mehr höher sein als die Dicke. Vorzugsweise beträgt die Dicke der Trägermembran zwischen 0,1 - 20 $\mu$m, bevorzugt zwischen 0,2 - 10 $\mu$m, besonders bevorzugt zwischen 0,5 - 5 $\mu$m, ganz besonders bevorzugt zwischen 0,5 - 2 $\mu$m. Die Membran kann bevorzugt auch als ein Isolationselement angesehen werden, welches eine Wärmeleitung, die durch das Heizelement resultiert, reduziert, sodass die Genauigkeit der Messung verbessert werden kann.

Vorzugsweise wird die Membran von einer Trägerstruktur gehalten. Bei der Trägerstruktur handelt es sich bevorzugt um eine Rahmenstruktur, welche im Wesentlichen durch eine durchgehende äußere Umrandung in Form von Seitenwänden eines freibleibenden flächigen Bereichs (der Kavität) gebildet wird. Die Rahmenstruktur ist dabei bevorzugt stabil und biegesteif. Bei einer eckigen Rahmenform werden die einzelnen Seitenbereiche, welche die Rahmenstruktur bevorzugt im Wesentlichen bilden, insbesondere Seitenwände genannt.

In einer weiteren bevorzugten Ausführungsform umfasst die Trägerstruktur ein Halbleitermaterial, wobei bevorzugt das Halbleitermaterial ausgewählt ist aus einer Gruppe umfassend Monosilizium, Polysilizium, Siliziumcarbid, Siliziumgermanium, Germanium, Galliumarsenid und/oder Galliumnitrid.

Diese Materialien sind in der Halbleiter- und/oder Mikrosystemtechnik besonders einfach und kostengünstig zu bearbeiten und eignen sich ebenfalls gut für eine Massenherstellung. Ebenso sind diese Materialien für ein Dotieren und/oder ein Beschichten besonders gut geeignet, um in bestimmten Bereichen die gewünschten elektrischen, mechanischen, thermischen und/oder optischen Eigenschaften zu erzielen. Die vorgenannten Materialien bieten vielfältige Vorteile aufgrund der Verwendbarkeit standardisierter Herstellungstechniken, welche für die Integration von weiteren Komponenten, wie z. B. elektronischen Schaltungen, ebenfalls besonders geeignet sind.

In weiteren bevorzugten Ausführungsformen kann die Trägerstruktur Keramik umfassen. Keramik zeichnet sich vorzugsweise dadurch aus, dass es ein anorganisches Material umfasst, unter Zugabe von Wasser geformt, bei Raumtemperatur getrocknet und anschließend durch einen Brennprozess ausgehärtet werden kann. Vorteilhaft kann durch den Einsatz von Keramik eine hohe Verschleißbeständigkeit erzielt werden.

Des Weiteren kann es bevorzugt sein, dass die Trägerstruktur Glas umfasst. Glas bezeichnet bevorzugt einen amorphen nichtkristallinen Feststoff. Vorteilhaft weist Glas eine hohe chemische und thermische Beständigkeit, eine gute elektrische Isolierfähigkeit sowie eine geringe optische Absorption auf. Aufgrund dieser vorteilhaften Eigenschaften eignet sich Glas besonders gut für die Trägerstruktur.

In weiteren bevorzugten Ausführungsformen kann die Trägerstruktur auch einen Kunststoff, vorzugsweise einen faserverstärkten Kunststoff, oder Hartpapier umfassen. Insbesondere kann die Trägerstruktur durch eine Leiterplatte gebildet werden bzw. durch Materialen, welche in Leiterplatten als Substrat einsetzbar sind (Leiterplattenmaterialien).

Vorzugsweise kann die Trägerstruktur aus einem Material, vorzugsweise einem Leiterplattenmaterial, gebildet sein, ausgewählt aus einer Gruppe umfassend Kunststoffe (z.B. Polyimide), faserverstärkte Kunststoffe (z. B. glasfaserverstärkte Kunststoffe wie GFK), Hartpapier (Werkstoff umfassend Papier und ein Phenol- und/oder Epoxidharz), FR4 und/oder FR5, ohne auf diese Beispiele beschränkt zu sein. Die vorgenannten Leiterplattenmaterialien, insbesondere flexible Leiterplattenmaterialien, stellen vorteilhaft eine besonders wirtschaftliche Option dar, um eine Trägerstruktur bereitzustellen, auf welcher der thermische Sensor sowie elektrische Anschlüsse zur Kontaktierung des thermischen Sensors, beispielsweise zu einer weiteren elektronischen Schaltung, vorliegen können.

Die Trägermembran wird bevorzugt von mindestens zwei Seitenbereichen, vorzugsweise vier Seitenbereichen der Trägerstruktur gehalten. Die Trägerstruktur kann bevorzugt aus einem Wafer- bzw. Substrat mithilfe von im Stand der Technik bewährten Prozessen zur Strukturierung, beispielsweise zur Bereitstellung einer Kavität an der Trägerstruktur, über die sich die Trägermembran erstreckt, gebildet werden.

Die Kavität bezeichnet bevorzugt eine Ausnehmung in der Trägerstruktur, d.h. vorzugsweise ein Bereich, in dem kein Substratmaterial der Trägerstruktur vorliegt, beispielsweise ein Bereich, in dem das Substratmaterial der Trägerstruktur entfernt, beispielsweise geätzt, wurde. Die Kavität stellt vorzugsweise einen thermisch isolierten Bereich bereit, auf dem das Heizelement, sowie vorzugsweise die Sensorkomponente, positioniert werden kann. Thermische Energie, welche durch Ansteuerung in das Heizelement des thermischen Sensors eingebracht wird, wird vorteilhaft mithin nicht oder nur in vermindertem Maße in die Trägerstruktur oder eine Membran, welche von der Trägerstruktur gehalten wird, eingeleitet. Stattdessen ist das Heizelement auf die Erwärmung der Probe zur Messung des Mikroplastik wie beschrieben ausgerichtet.

In bevorzugten Ausführungsformen kann die Kavität der Trägerstruktur ein Hohlraum sein, welcher mit einem Gas gefüllt ist. Die Kavität kann vorzugsweise gegenüber einer Umgebung des thermischen Sensors offen oder geschlossen vorliegen. In bevorzugten Ausführungsformen kann das Gas im Hinblick auf thermisch isolierende Eigenschaften ausgewählt sein und in die geschlossene Kavität eingebracht vorliegen. In bevorzugten Ausführungsformen kann die Kavität offen sein, wobei vorzugsweise innerhalb der Kavität Umgebungsluft vorliegt.

In weiteren Ausführungsformen kann es bevorzugt sein, dass die Kavität mit einem Material aufgefüllt ist, welche sich vom Substratmaterial der Trägerstruktur unterscheidet, wobei auch in diesem Fall das Material vorzugsweise im Hinblick auf eine thermische Isolation ausgewählt ist. Bevorzugt kann das Material, ein poröses Material sein. Vorzugsweise kann durch das aufgefüllte Material, vorzugsweise durch das poröses Material, neben einer thermische Isolierung zudem eine hohe mechanische Stabilität gewährleistet werden.

Die Membran wird vorzugsweise derart von der Trägerstruktur gehalten, dass sie sich über die Kavität erstreckt und eine obere Grenze der Kavität definiert. Die Kavität befindet sich somit bevorzugt unterhalb des thermischen Sensors. Die Trägerstruktur kann bevorzugt eine oder mehrere Kavitäten umfassen. Eine Kavität kann sich bevorzugt durchgängig durch die Trägerstruktur erstrecken, sodass vorzugsweise die Höhe der Kavität im Wesentlichen der Höhe der Trägerstruktur entspricht. Es kann aber auch bevorzugt sein, dass die Kavität derart in der Trägerstruktur eingebracht ist, dass sie eine geringere Höhe als die Höhe der Trägerstruktur aufweist.

In einer bevorzugten Ausführungsform umfasst die Trägermembran ein Material ausgewählt aus einer Gruppe umfassend Siliziumnitrid, Siliziumdioxid und/oder Polyimid.

Die bevorzugten Materialien für die Trägermembran haben sich dahingehend als vorteilhaft erwiesen, dass sie neben der hervorragenden Ausgestaltungsmöglichkeit als Trägermembran auch eine thermische Isolation bieten, sodass eine durch die Trägermembran bedingte Wärmeleitung verringert oder vermieden wird. Demzufolge wird durch ein oder mehrere der genannten bevorzugten Materialien die vom Heizelement ausgehende Wärmeenergie effizient dafür genutzt, eine oszillierende Erwärmung zu bewirken. Die durch die Trägermembran resultierende Wärmeleitung wird vorteilhaft reduziert und damit ein Verlust an Wärme verringert, sodass eine optimale Nutzung des Wärmefeldes gewährleistet werden kann.

In einer weiteren bevorzugten Ausführungsform ist der thermische Sensor dadurch gekennzeichnet, dass der thermische Sensor eine Trägerstruktur umfasst, wobei das Heizelement und/oder die Sensorkomponente auf einem Steg der Trägerstruktur aufgebracht ist.

Ein Steg bezeichnet bevorzugt einen Abschnitt der Trägerstruktur, welcher sich oberhalb der Kavität erstreckt. Der Steg ist bevorzugt parallel zu dem Heizelement und/oder der Sensorkomponente angeordnet, was beispielsweise bedeuten kann, dass der Steg parallel zu einer Richtung maximaler Ausdehnung des Heizelements angeordnet ist.

Bevorzugt ist ein Steg länglich ausgestaltet. Das bedeutet bevorzugt, dass der Steg eine Länge aufweist, die höher ist als seine Querschnittsdimensionen, wie Breite und/oder Dicke. Ein Steg kann sich bevorzugt zwischen zwei gegenüberliegenden Seiten der Trägerstruktur erstrecken. Es kann auch bevorzugt sein, dass ein Steg nur an einer Seite der Trägerstruktur angebracht ist.

Durch eine Anordnung von eine oder mehrere Stegen, auf denen das Heizelement und/oder die Sensorkomponente angeordnet sind, wird vorteilhaft bewirkt, dass eine verringerte parasitäre Wärmeleitung stattfinden kann, welche Messergebnisse hinsichtlich einer Temperaturmessung verfälschen könnte. Mehrere Stege oder die Anordnung in parallelen Reihen oder als Gitterstruktur resultiert in einen möglichst langen Weg für die parasitäre Wärmeleitung, infolgedessen ein noch geringerer Einfluss auf die Sensorkomponente und damit auch eine höhere Sensitivität erreicht wird.

In bevorzugten Ausführungsformen kann das Material des Heizelements, der Sensorkomponente und der Trägerstruktur identisch sein, wobei vorzugsweise eine zusätzliche Passivierung der Strukturen erfolgen kann.

In weiteren bevorzugten Ausführungen kann die Trägermembran, auf welcher das Heizelement und/oder die Sensorkomponente vorliegt, perforiert sein. Durch Anbringung von einer oder mehrere Perforationen in der Trägermembran kann vorteilhaft eine parasitäre Wärmeleitung über die Trägermembran verringert werden. Die Perforationen können unterschiedlichen Dimensionen und Formen aufweisen. Beispielsweise kann es bevorzugt sein die Perforationen als runde (z.B. kreisförmige oder elliptische) oder eckige (z.B. rechteckige oder quadratische) Öffnungen in die Trägermembran einzubringen. In Vorzugsformen können die Perforationen auch als längliche Spalte vorliegen, welche sich im Wesentlichen über eine gesamte Länge oder Breite der Trägermembran erstrecken. In besonders bevorzugten Ausführungsformen kann eine Perforation derart erfolgen, dass von der Trägermembran lediglich längliche Stege, wie obig beschrieben, verbleiben, auf denen das Heizelement und/oder die Sensorkomponente aufgebracht vorliegen.

In einer weiteren bevorzugten Ausführungsform liegen das Heizelement und/oder die Sensorkomponente als Draht vor, welche sich von vorzugsweise von einem Seitenbereich der Trägerstruktur zu einem gegenüberliegenden Seitenbereich erstrecken. Wie auch ein Steg kann ein Draht eine besonders kompakte Dimensionierung aufweisen und insbesondere durch eine bedeutend kleinere Querschnittsdimension (Faktor 10, 100 oder mehr) im Vergleich zur Länge gekennzeichnet sind. Im Gegensatz zur Ausführung eines Steges, welcher aus dem Trägermaterial der Trägerstruktur gebildet wird und auf den das Heizelement und/oder die Sensorkomponente angebracht ist, kann es mithin auch bevorzugt sein Heizelement und/oder die Sensorkomponente in Form eines Drahtes selbst bereitzustellen. Vorzugsweise erstreckt sich ein Draht für die Ausbildung des Heizelementes und/oder der Sensorkomponente oberhalb einer Kavität der Trägerstruktur. Durch eine Passivierungsschicht können vorzugsweise die Heiz- bzw. Sensordrähte vor unerwünschten Einflüssen der Probe geschützt werden.

In einer weiteren bevorzugten Ausführungsform ist der thermische Sensor dadurch gekennzeichnet, dass der thermische Sensor eine Bindungsoberfläche umfasst, welche dazu ausgelegt ist, das Mikroplastik auf Basis einer mechanischen, chemischen und/oder elektrostatischen Wechselwirkung zu binden.

Eine Bindungsoberfläche meint bevorzugt eine Ausgestaltung am thermischen Sensor, welche es ermöglicht, eine Bindung mit Mikroplastik einzugehen, um dieses im Messbereich des thermischen Sensors anzureichern. Die Bindung ist bevorzugt über einen Zeitbereich stabil, d. h., dass die Bindung bevorzugt in einem Zeitintervall bestehen bleibt, welche mindestens 0,5 s (Sekunden), mindestens 1 s, mindestens 3 s, mindestens 5 s, mindestens 10 s, mindestens 30 s, mindestens 50 s, mindestens 100 s oder mehr beträgt. Mithin stellt bevorzugt die Bindungsoberfläche eine Oberflächenmodifikation dar, infolgedessen das Mikroplastik mit dem thermischen Sensor eine Bindung eingehen kann.

Bevorzugt weist die Bindungsoberfläche eine Affinität zu bestimmten Typen von Mikroplastik auf. Vorteilhaft kann hierdurch eine effektivere Detektion von Mikroplastik erreicht werden, da eine spezifische Bindung an eine bestimmte Sorte von Mikroplastik gewährleistet wird.

Die Bindung des Mikroplastiks an die Bindungsoberfläche kann bevorzugt auf einer mechanischen, chemischen und/oder elektrostatische Wechselwirkung basieren. Mit einer Wechselwirkung ist hierbei die auftretende Kraft und/oder Reaktion gemeint, wodurch eine Bindung des Mikroplastiks mit der Bindungsoberfläche ermöglicht wird. Bei einer mechanischen Bindung kann die Verbindung bevorzugt durch eine Verzahnung des Mikroplastiks mit der Bindungsoberfläche erreicht werden. Dies kann durch eine entsprechende Strukturierung, Aufrauung ermöglicht werden und/oder durch ein zusätzliches Material, wie beispielsweise Kohlenstoff-Nanoröhrchen.

Eine chemische Bindung meint bevorzugt eine ionische Bindung, kovalente Bindung, metallische Bindung, koordinative Bindung, eine Wasserstoffbrückenbindung, eine Dipol-Dipol-Wechselwirkung und/oder Van-der-Waals-Kräfte, wobei ebenfalls ein zusätzliches Material oder chemische Oberflächenmodifikation bereitgestellt werden kann, welche die (An-)Bindung des Mikroplastiks an die Bindungsoberfläche unterstützt. Die chemische Bindungsfähigkeit bzw. Affinität hängt insbesondere von der funktionellen Gruppe des Polymers des Mikroplastiks ab. So bindet beispielsweise Polytetrfluorethylen (PTFE) als Polymer des Mikroplastiks besonders gut mit einem hydrophoben Material. Mithin wird durch ein hydrophobes Material an der Bindungsoberfläche die Affinität für eine chemische Bindung mit PTFE gesteigert. Für verbesserte Anbindungsfähigkeit mit beispielsweise PTFE kann die Bindungsoberfläche ein Material umfassen, das ausgewählt ist aus einer Gruppe umfassend Acryl-Polymere, Ether-Polymere, Fluorkohlenstoff-Polymere, Polystyrol-Polymere, Poly(vinylchlorid)-Polymere und/oder Poly(N-vinylpyrrolidon)-Polymere (PVP).

Eine elektrostatische Bindung kann beispielsweise durch eine Oberflächenladung bereitgestellt werden, infolgedessen durch elektrostatische Kräfte das Mikroplastik mit der Bindungsoberfläche gebunden werden kann. Die Oberflächenladung kann beispielsweise durch eine Erhöhung der elektrischen Spannung am thermischen Sensor und einer damit einhergehenden Polarisation der Bindungsoberfläche ermöglicht werden.

In einer weiteren bevorzugten Ausführungsform ist der thermische Sensor dadurch gekennzeichnet, dass das Heizelement und/oder die Sensorkomponente mit einer Passivierungsschicht beschichtet ist, wobei bevorzugt die Passivierungsschicht ein Material umfasst, das ausgewählt ist aus einer Gruppe umfassend Siliziumdioxid, Eisenoxid, Chromoxid, Tantaloxid, Aluminiumnitrid und/oder Siliziumnitrid.

Die Passivierungsschicht kann bevorzugt oberflächenkonform bzw. enganliegend auf das Heizelement und/oder die Sensorkomponente aufgebracht sein. Bevorzugt liegt eine Einbettung des Heizelementes und/oder der Sensorkomponente zwischen der Trägermembran und der Passivierungsschicht vor. In dieser Hinsicht liegt bevorzugt das Heizelement und/oder die Sensorkomponente bevorzugt auf der Membran vor bzw. integriert innerhalb der Membran und der Passivierungsschicht. Durch die Passivierungsschicht kann vorteilhafterweise eine elektrische Isolierung und/oder eine Schutzfunktion für den thermischen Sensor erzielt werden.

In einem weiteren Aspekt betrifft die Erfindung ein System umfassend einen thermischen Sensor nach dem obig Beschriebenen und ein Mittel zur Beeinflussung einer Konzentration von Mikroplastik in einer Probe.

Das Mittel kann eine (globale) Erhöhung der Konzentration von Mikroplastik betreffen, z. B. eine separate Heizplatte für die Verdunstung etc. oder eine Zentrifuge zur Auftrennung der Probe. Das Mittel zur Beeinflussung einer Konzentration von Mikroplastik in einer Probe kann ebenso einen Trichter oder Filter umfassen. Die im Rahmen der Beschreibung des obigen Verfahrens in Bezug auf bevorzugte Mittel zur Beeinflussung einer Konzentration von Mikroplastik, wie einen Trichter, eine separate Heizplatte oder einen Filter gelten in analoger Weise für das System.

Vorteilhaft kann durch das Mittel zur Beeinflussung einer Konzentration von Mikroplastik die Genauigkeit der durch die Temperaturantwort bestimmbaren Eigenschaften des Mikroplastiks verbessert werden. Dies ergibt sich insbesondere durch einen höheren Einfluss des Mikroplastiks auf die thermischen Eigenschaften der Probe, im Vergleich zu einer Situation, bei der das Mikroplastik mit einer geringeren Konzentration in der Probe enthalten ist. Unter Abschätzung oder Kenntnis des Faktors der Erhöhung der Konzentration des Mikroplastiks in der Probe kann auf einfache Weise auf die ursprüngliche Menge oder Konzentration des Mikroplastiks in der Probe geschlossen werden.

In einem weiteren Aspekt betrifft die Erfindung eine Verwendung des thermischen Sensors oder Systems nach dem obig Beschriebenen zur Detektion von Mikroplastik in einer Probe.

Der durchschnittliche Fachmann erkennt, dass technische Merkmale, Definitionen und Vorteile von Ausführungsformen, welche für den thermischen Sensor offenbart wurden, gleichermaßen auf das System sowie die Verwendung des thermischen Sensors oder des Systems zur Detektion von Mikroplastik in einer Probe zutreffen, und umgekehrt.

Die erfindungsgemäßen Aspekte sollen im Folgenden anhand von Figuren beispielhaft erläutert werden, ohne auf diese Figuren beschränkt zu sein.

**Figuren**

Kurzbeschreibung der Figuren

**Fig. 1** Schematische Illustration eines bevorzugten Messprinzips, welches bevorzugten Ausführungsformen des erfindungsgemäßen Verfahrens zu Grunde liegt.

**Fig. 2** Darstellung einer bevorzugten Ausführungsform eines thermischen Sensors in einer Draufsicht und Querschnittsansicht

**Fig. 3** Darstellung von bevorzugten Ausführungsformen für eine differentielle Messung

**Fig. 4** Darstellung von bevorzugten Ausführungsformen für eine Konzentrationserhöhung von Mikroplastik in der Probe

Detaillierte Beschreibung der Figuren

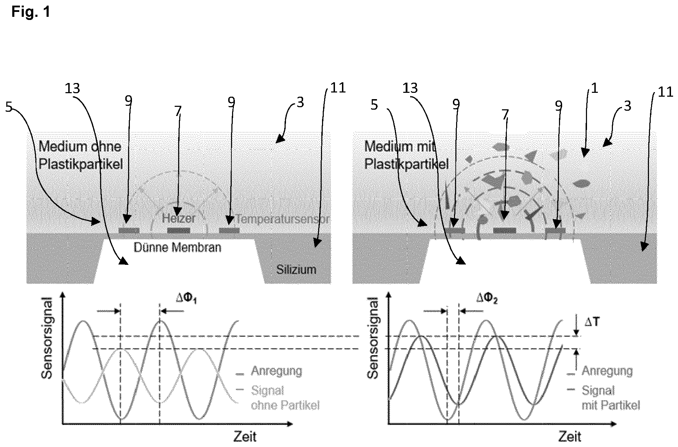

Fig. 1 dient der schematischen Darstellung des erfindungsgemäßen Prinzips. Es wird unter Einsatz eines thermischen Sensor **5** eine Detektion von Mikroplastik **1** in einer Probe **3** ermöglicht. Dazu wird zunächst der thermische Sensor **5** umfassend ein Heizelement **7** und eine Sensorkomponente **9,** die in der Ausführungsform gemäß der Fig. 1 als Temperatursensor **9** vorliegt. Die Probe **3** wird mit Heizelement **7** in Kontakt gebracht. Es erfolgt eine oszillierende Ansteuerung des Heizelementes **7** mittels eines Ansteuerungssignales und eine Erfassung einer Temperaturantwort des thermischen Sensors **5** mittels des Temperatursensors **9** als Sensorkomponente. Das Mikroplastik **1** wird in der Probe **3** anhand der Temperaturantwort detektiert.

Der Einsatz des thermische Sensors **5** zur Ausführung des Verfahrens zur Detektion von Mikroplastik **1** ist zum einen dahingehend vorteilhaft, dass es besonders einfach umgesetzt werden kann. So erfordert das erfindungsgemäße Verfahren im Wesentlichen lediglich den Einsatz eines thermischen Sensors **5** umfassend ein Heizelement **7** und eine Sensorkomponente **9**. Dabei soll das Heizelement **7** mittels eines Ansteuerungssignals oszillierend angesteuert werden und die Temperaturantwort des thermischen Sensors **5** erfasst werden. Mit dem erfindungsgemäßen Verfahren kann somit sowohl auf eine Verwendung von zusätzlichen chemischen Verbrauchskomponenten, wie z.B. Farbstoffen im Falle chemischer Analysen, als auch komplexen Geräten, wie beispielsweise Mikroskope für eine optische Detektion, verzichtet werden.

Stattdessen kann das erfindungsgemäße Verfahren mit einem kompakten thermischen Sensor **5** ausgeführt werden, der vorzugsweise mittels der MEMS-Technologie ausgeführt werden kann. Vorteilhaft kann der thermische Sensor **5** zum einen besonders kompakt ausgestaltet sein und bedarf zum anderen keine chemischen Substanzen, welche ein Laborsetting erfordern. Dies ermöglicht vorteilhaft eine Vor-Ort-Analyse von Proben **3** zur Detektion von Mikroplastik **1.** Kosten- und zeitsensitive Analysen im Labor sind nicht notwendig. Stattdessen kann mit einfachen Mitteln an verschiedensten Stellen von Interesse eine Detektion von Mikroplastik **1** ermöglicht werden, beispielsweise Wasserleitungen, Umweltbereichen oder innerhalb von Industrieanlagen. Durch die mögliche Bereitstellung kostengünstiger und kompakter thermischer Sensoren **5** lässt sich das Verfahren zudem auf wirtschaftliche Weise skalieren und beispielsweise für eine flächendeckende Überwachung von Mikroplastik **1** verwenden. Mittels kommunikationsfähiger thermischer Sensoren **5** können dabei auch onlinefähige Daten zu etwaigen Verschmutzung durch Mikroplastik **1** in verschiedensten Bereichen gewonnen werden, um hieraus Handlungsstrategien zur Prävention oder Vermeidung abzuleiten.

Möglich wird dies erfindungsgemäß unter minimalen Ressourceneinsatz durch die Erkenntnis, dass die Tatsache, dass sich die Probe **3** und das Mikroplastik **1** in ihren thermischen Eigenschaften voneinander unterscheiden, technisch zur thermischen Detektion von Mikroplastik **1** genutzt werden kann. So kann insbesondere auf überraschend sensitive Weise anhand einer Temperaturantwort eines thermischen Sensors **5** bei einer oszillierenden Ansteuerung auf Mikroplastik **1** in einer Probe **3** geschlossen werden. Hierbei wird ausgenutzt, dass eine Probe **3** in Abhängigkeit des Anteils an Mikroplastik **1** unterschiedliche thermische Eigenschaften aufweist. So ändert sich die Temperaturantwort des thermischen Sensors signifikant insofern, dass beispielsweise nicht nur Wasser als solches in der Probe **3** vorliegt, sondern zudem in dem Wasser auch Mikroplastik **1** enthalten ist. Mögliche Aussagen sind hierbei nicht nur qualitativer Natur hinsichtlich eines Vorhandenseins oder Nicht-Vorhandenseins von Mikroplastik **1,** sondern können vorzugsweise zudem einen quantitativen Wert aufweisen, indem eine absolute Menge oder Konzentration des Mikroplastiks in der Probe messbar ist.

Das kann, ohne auf die Theorie beschränkt zu sein, zumindest teilweise darauf zurückgeführt werden, dass sich die Dynamik einer thermischen Welle ändert, sofern Mikroplastik **1** in einer Probe **3** vorliegt. Anders ausgedrückt, breitet sich eine thermische Welle, deren Ausbreitung durch die oszillierende Ansteuerung des Heizelementes **7** verursacht wird, in Abhängigkeit vom Mikroplastik **1** in der Probe **3** anders aus. Dieses Verhalten spiegelt sich wiederum in einer Temperaturantwort des thermischen Sensors **5** wider, über die eine thermische Eigenschaft der Probe bestimmt und damit ein Rückschluss auf das Mikroplastik ermöglicht wird.

Dies ist auch in den Messkurven der Fig. 1 dargestellt. In der linken Darstellung wird eine Probe **3** dargestellt, in der kein Mikroplastik enthalten. Unter der Darstellung des thermischen Sensors **5** ist das oszillierende Ansteuerungssignal für das Heizelement **7** dargestellt. Die Temperaturantwort ist gegenüber dem Ansteuerungssignal um $\Delta\phi_1$ phasenverschoben. In der rechten Darstellung ist Mikroplastik **1** in der Probe **3** enthalten. In den Messungen ist festzustellen, dass die Temperaturantwort im Vergleich zur ersten Messung eine um $\Delta T$ höhere Amplitude aufweist, wobei die Phase $\Delta\phi_2$ geringer ausfällt. Demzufolge ändert sich die Temperaturantwort durch das Vorhandensein von Mikroplastik **1** in der Probe. Über die Temperaturantwort kann vorteilhaft eine thermische Eigenschaft der Probe **3** bestimmt werden, über welche das Mikroplastik **1** in der Probe **3** detektierbar ist.

Da thermische Eigenschaften materialspezifisch sind, kann vorzugsweise zudem eine zuverlässige Bestimmung der Zusammensetzung des Mikroplastiks **1** ermöglicht werden. Mit der Zusammensetzung ist bevorzugt hierbei insbesondere die chemische Komposition und damit die Art bzw. Beschaffenheit des Mikroplastiks **1** gemeint.

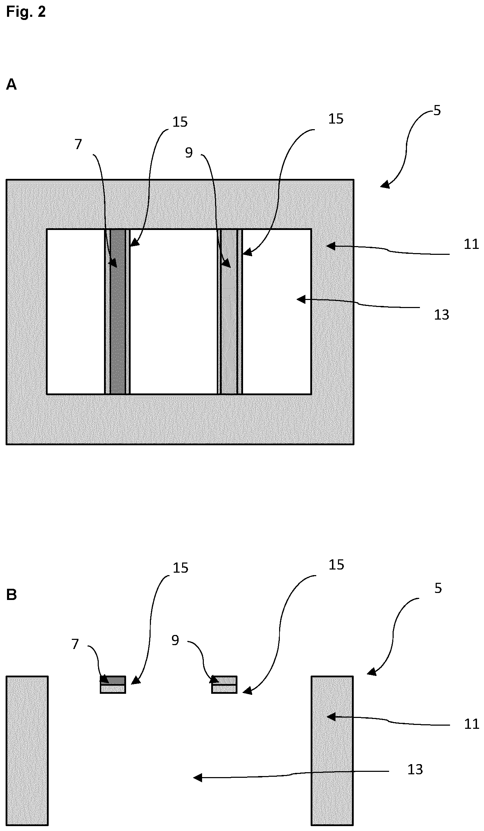

Fig. 2A zeigt eine Draufsicht und Fig. 2B zeigt eine Querschnittsansicht eines bevorzugten thermischen Sensors **5.**

Der thermische Sensor **5** umfasst eine Trägerstruktur **11,** wobei das Heizelement **7** und die Sensorkomponente **9** auf einem Steg **15** der Trägerstruktur **11** angebracht sein können.

Ein Steg **15** bezeichnet bevorzugt einen Abschnitt der Trägerstruktur **11,** welcher sich oberhalb der Kavität **13** erstreckt. Der Steg **15** ist parallel zu dem Heizelement und der Sensorkomponente angeordnet, was hierbei bedeutet, dass der Steg **15** parallel zu einer Richtung maximaler Ausdehnung des Heizelements angeordnet ist.

Der Steg **15** ist hierbei länglich ausgestaltet. Das bedeutet, dass der Steg eine Länge aufweist, die höher ist als seine Querschnittsdimensionen, wie Breite und/oder Dicke. Der Steg **15** erstreckt sich zwischen zwei gegenüberliegenden Seiten der Trägerstruktur **11.**

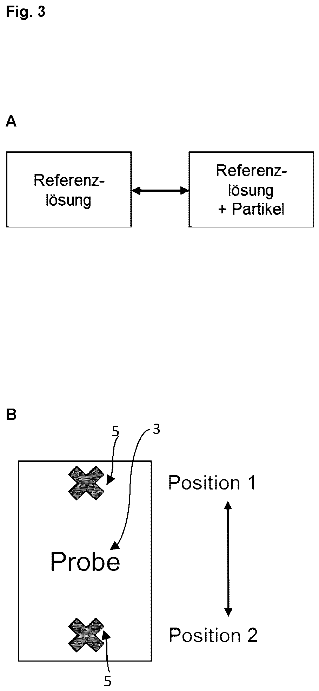

Durch eine Anordnung von eine oder mehreren Stegen **15,** auf denen das Heizelement und/oder die Sensorkomponente angeordnet sind, wird vorteilhaft bewirkt, dass eine verringerte parasitäre Wärmeleitung stattfinden kann, welche Messergebnisse hinsichtlich einer Temperaturmessung verfälschen könnte. Mehrere Stege **15** oder die Anordnung in parallelen Reihen oder als Gitterstruktur resultiert in einen möglichst langen Weg für die parasitäre Wärmeleitung, infolgedessen ein noch geringerer Einfluss auf die Sensorkomponente und damit auch eine höhere Sensitivität erreicht wird. Fig. 3A zeigt schematisch eine bevorzugte Ausführungsform für eine differentielle Messung. Im Rahmen einer differentiellen Messung bezeichnet bevorzugt eine Referenzprobe eine Probe, welche ein identisches oder ähnliches Trägermedium, wie eine zu messende Probe umfasst, wobei die Referenzprobe vorzugsweise kein Mikroplastik oder im Wesentlichen kein Mikroplastik enthält. Im Sinne der Erfindung kann eine zu vermessende Probe auch als Messprobe bezeichnet werden.

Insofern können mittels einer differentiellen Messung die Temperaturantworten verglichen werden, die bei einer Referenzprobe (ohne Mikroplastik) und einer (Mess-)Probe (mit Mikroplastik) erhalten werden, um das Mikroplastik zu detektieren. Beispielsweise kann es bevorzugt sein für Meerwasser als eine (Mess-)Probe eine Referenzprobe bereitzustellen, welche ebenfalls als Trägermedium Meerwasser umfasst, jedoch nachweislich kein oder nur einen geringen Anteil an Mikroplastik besitzt. Ein ähnliches Trägermedium kann jedoch auch bedeuten, dass beispielsweise anstelle von Meerwasser, Wasser mit einem definierten Salzanteil, destilliertes Wasser oder aber ein anderes Wasser genutzt wird.

Da die Referenzprobe - bis auf einen möglichen Anteil an Mikroplastik - vorzugsweise der (Mess-)probe ähnelt, sind etwaige Differenzen der jeweiligen Temperaturantworten besonders spezifisch für ein potentielles Vorhandensein des Mikroplastiks. Die differentielle Messmethode erlaubt somit unter Verwendung von lediglich zwei thermischen Sensoren sowohl eine präzisere, sensitivere Messung als auch eine umfassendere Analyse des Mikroplastiks (beispielsweise im Hinblick auf eine Zusammensetzung des Mikroplastiks).

Fig. 3B zeigt schematisch eine bevorzugte Ausführungsform für eine differentielle Messung, bei der zwei thermische Sensoren **5** an unterschiedlichen Positionen innerhalb der Probe **3** eingebracht sind.

Bei einer differentiellen Messung, bei der mindestens zwei thermische Sensoren **5** an unterschiedlichen Positionen innerhalb der Probe eingebracht sind, können bevorzugt Gravitationseffekte oder andere Effekte, welche zu einer unterschiedlichen Konzentration des Mikroplastik innerhalb der Probe führen können, berücksichtigt und im Rahmen der Bestimmung des Mikroplastiks ausgenutzt oderkompensiert werden. Je nachdem, wie schwer die Partikel sind, können sie sich an bestimmen Positionen innerhalb der Probe **3** eher ansammeln als in anderen Positionen. So werden Partikel des Mikroplastiks, welche schwerer als ein Trägermedium sind, sich verstärkt in einem oberen Bereich der Probe im Vergleich zu einem unteren Bereich der Probe **3** ansammeln. Durch eine Positionierung der beiden thermischen Sensoren **5** in einem oberen und unteren Bereich, kann bevorzugt einer der thermischen Sensoren als Referenzsensor dienen, in dem eine Temperaturantwort gemessen wird, bei der ein geringerer Anteil an Mikroplastik zu erwarten ist, während der andere Sensor als Messsensor dienen kann, bei dem eine Temperaturantwort gemessen wird, bei der ein höherer Anteil an Mikroplastik zu erwarten ist. Auch in diesem Fall lässt sich durch eine differentielle Messung bzw. eines daraus ableitbaren Kombinationssignals eine besonders sensitive Detektion und/oder aussagekräftige Charakterisierung des Mikroplastiks gewinnen.

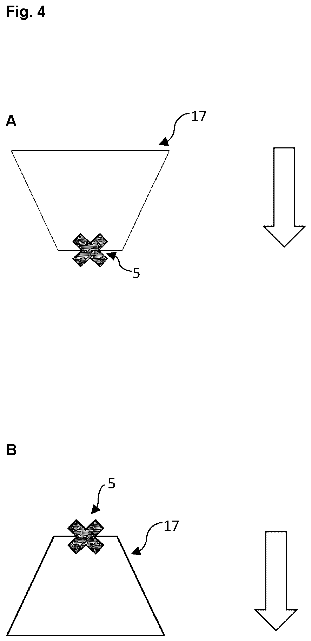

Fig. 4 zeigt weitere bevorzugte Ausführungsformen des Verfahrens, bei der ein Trichter **17** vorliegt. Durch den Trichter **17** kann das Mikroplastik zum thermischen Sensor **5** geführt werden.

Ein verjüngter Abschnitt des Trichters **17** kann in Richtung des Gravitationsfeldes positioniert sein, was insbesondere dann vorteilhafthaft ist, wenn die Mikroplastikpartikel eine höhere Dichte haben als das Trägermedium der Probe. Dies ist in Fig. 4A dargestellt. Umgekehrt kann es auch bevorzugt sein, dass der verjüngte Abschnitt und dementsprechend auch der thermische Sensor **5** entgegen der Gravitationskraft bzw. der Schwerkraft nach oben ausgerichtet ist, wenn die Mikroplastikpartikel eine geringere Dichte aufweisen als das Trägermedium der Probe. Dies ist in Fig. 4B gezeigt. Der Pfeil in den Fig. 4A, B gibt die Richtung des Gravitationsfeldes bzw. der Schwerkraft an. Vorteilhaft wird hierdurch eine zuverlässige Detektion und Messung des Mikroplastiks in der Probe gewährleistet.

**Bezugszeichenliste**

1   Mikroplastik
3   Probe
5   Thermischer Sensor
7   Heizelement
9   Temperatursensor
11   Trägerstruktur
13   Kavität
15   Steg
17   Trichter

**Literaturverzeichnis**

Beckett C. et al. "Flow-Through Quantification of Microplastics Using Impedance Spectroscopy", ACS Sens. 2021, 6, 238-244.

Colson, Beckett C., and Anna PM Michel. "Flow-through quantification of microplastics using impedance spectroscopy." ACS sensors 6.1 (2021): 238-244.

Gongi, Wejdene, et al. "A novel impedimetric sensor based on cyanobacterial extracellular polymeric substances for microplastics detection." Journal of Polymers and the Environment 30.11 (2022): 4738-4748

Kopatz, Verena, et al. "Micro-and Nanoplastics Breach the Blood-Brain Barrier (BBB): Biomolecular Corona's Role Revealed." Nanomaterials 13.8 (2023): 1404.

Leslie, Heather A., et al. "Discovery and quantification of plastic particle pollution in human blood." Environment international 163 (2022): 107199.

Lim, XiaoZhi. "Microplastics are everywhere - but are they harmful." Nature 593.7857 (2021): 22-25.

Meiler, Valentin, et al. "Approaches to detect microplastics in water using electrical impedance measurements and support vector machines." IEEE Sensors Journal 23.5 (2023): 4863-4872.

Senathirajah, Kala, et al. "Estimation of the mass of microplastics ingested-A pivotal first step towards human health risk assessment." Journal of Hazardous Materials 404 (2021): 124004.

Singh, Bibhawari, et al. "Microplastics as an emerging threat to human health: Challenges and advancements in their detection." Applied Chemical Engineering 6.2 (2023): 2103.

**Patentansprüche**

1. Verfahren zur Detektion von Mikroplastik (1) in einer Probe (3) umfassend folgende Schritte:

a) Bereitstellung eines thermischen Sensors (5) umfassend ein Heizelement (7) und eine Sensorkomponente (7, 9),
b) In-Kontakt-Bringen der Probe (3) mit dem thermischen Sensor (5),
c) Oszillierende Ansteuerung des Heizelementes (7) mittels eines Ansteuerungssignales und Erfassung einer Temperaturantwort des thermischen Sensors mittels der Sensorkomponente (7, 9),
d) Detektion des Mikroplastiks (1) in der Probe (3) anhand der Temperaturantwort.

2. Verfahren nach dem vorherigen Anspruch
**dadurch gekennzeichnet, dass**

die Detektion des Mikroplastiks in der Probe (3) anhand einer Messung einer Amplitude und/oder einer Phase der Temperaturantwort erfolgt und/oder

die Detektion des Mikroplastiks eine Bestimmung einer Präsenz, einer Konzentration, einer Masse und/oder eines Volumens des Mikroplastiks in der Probe umfasst.

3. Verfahren nach einem oder mehreren der vorherigen Ansprüche
**dadurch gekennzeichnet, dass**
die Probe (3) ein Trägermedium und das Mikroplastik umfasst, wobei vorzugsweise das Trägermedium und das Mikroplastik (1) in mindestens einer thermischen Eigenschaft unterscheiden, wobei bevorzugt die mindestens eine thermische Eigenschaft ausgewählt ist aus einer Gruppe umfassend eine Wärmeleitfähigkeit, eine Dichte, eine spezifische Wärmekapazität und/oder eine Temperaturleitfähigkeit.

4. Verfahren nach dem vorherigen Anspruch
**dadurch gekennzeichnet, dass**
das Trägermedium durch eine Flüssigkeit, bevorzugt Wasser, besonders bevorzugt Meerwasser, Seewasser, Flusswasser, Abwasser oder Trinkwasser gebildet wird.

5. Verfahren nach einem oder mehreren der vorherigen Ansprüche
**dadurch gekennzeichnet, dass**

das Ansteuerungssignal genau eine oder mehrere Frequenzen umfasst und/oder eine Auswertung des Sensorsignals bei genau einer Frequenz oder bei mehreren Frequenzen erfolgt und/oder
das Ansteuerungssignal einen ersten Frequenzbereich und einen zweiten Frequenzbereich umfasst, wobei bevorzugt der zweite Frequenzbereich eine Mindestfrequenz von 1 kHz umfasst und bei der Auswertung des zweiten Frequenzbereiches eine Messung der elektrischen Impedanz erfolgt.

6. Verfahren nach einem oder mehreren der vorherigen Ansprüche
**dadurch gekennzeichnet, dass**
für das In-Kontakt-Bringen der Probe (3) mit dem Heizelement die Probe (3) auf den thermischen Sensor (5) aufgebracht wird oder der thermische Sensor (5) in die Probe (3) eingebracht wird.

7. Verfahren nach einem oder mehreren der vorherigen Ansprüche
**dadurch gekennzeichnet, dass**
zur Detektion des Mikroplastiks in der Probe (3) eine Konzentration des Mikroplastiks (1) erhöht wird, bevorzugt durch eine Verdampfung oder Verdunstung, eine Filterung, eine Auftrennung des Mikroplastiks (1) von der Probe (3) und/oder durch den Einsatz eines Trichters (17).

8. Verfahren nach einem oder mehreren der vorherigen Ansprüche
**dadurch gekennzeichnet, dass**
eine differentielle Messung mittels zweier thermischer Sensoren (5) ausgeführt wird, wobei bevorzugt die differentielle Messung eine Messung zwischen der Probe (3) und einer Referenzprobe, eine Messung zwischen zwei unterschiedlichen Positionen des Mikroplastiks (1) innerhalb der Probe (3) oder eine Messung zwischen zwei unterschiedlichen Zeitpunkten umfasst.

9. Thermischer Sensor (5) zur Ausführung eines Verfahrens nach einem oder mehreren der vorherigen Ansprüche umfassend ein Heizelement (7) und eine Sensorkomponente (7, 9), wobei das Heizelement (7) dazu ausgelegt ist, mittels eines Ansteuerungssignals oszillierend angesteuert zu werden und anhand einer Messung einer Temperaturantwort der Sensorkomponente (9) Mikroplastik in einer Probe (3) detektierbar ist.

10. Thermischer Sensor (5) nach dem vorherigen Anspruch
**dadurch gekennzeichnet, dass**
der thermische Sensor (5) eine elektronische Schaltung aufweist, wobei die elektronische Schaltung dazu konfiguriert ist, das Heizelement (7) oszillierend mit einem Ansteuerungssignal anzusteuern und/oder eine Temperaturantwort des thermischen Sensors (5) auszuwerten, um Mikroplastik anhand der Temperaturantwort zu bestimmen.

11. Thermischer Sensor (5) nach einem oder mehreren der vorherigen Ansprüche 9 - 10
**dadurch gekennzeichnet, dass**
die Sensorkomponente das Heizelement (7) selbst ist oder die Sensorkomponente einen Temperatursensor (9) umfasst.

12. Thermischer Sensor (5) nach einem oder mehreren der vorherigen Ansprüche 9 - 11
**dadurch gekennzeichnet, dass**

der thermische Sensor (5) eine Trägerstruktur (11) umfasst, welche eine Kavität (13) aufweist, oberhalb derer sich eine Trägermembran erstreckt, wobei das Heizelement (7) und/oder die Sensorkomponente (7, 9) auf der Trägermembran positioniert sind, und/oder
der thermische Sensor (5) eine Trägerstruktur (11) umfasst, wobei das Heizelement (7) und/oder die Sensorkomponente (7, 9) auf einem Steg (15) der Trägerstruktur (11) angebracht ist.

13. Thermischer Sensor (5) nach einem oder mehreren der vorherigen Ansprüche 9 - 12
**dadurch gekennzeichnet, dass**
der thermische Sensor (5) eine Bindungsoberfläche umfasst, welche dazu ausgelegt ist, das Mikroplastik (1) auf Basis einer mechanischen, chemischen oder elektrischen Wechselwirkung zu binden.

14. System umfassend einen thermischen Sensor nach einem oder mehreren der Ansprüche 9 - 13 und ein Mittel zur Beeinflussung einer Konzentration von Mikroplastik in einer Probe.

15. Verwendung des thermischen Sensors nach einem oder mehreren der vorherigen Ansprüche 9 - 13 oder eines Systems nach Anspruch 14 zur Detektion von Mikroplastik (1) in einer Probe (3).

**Fig. 1**

**Fig. 2**

A

B

**Fig. 3**

**A**

**B**

Fig. 4

A

17

5

B

5

17

Europäisches
Patentamt

European
Patent Office

Office européen
des brevets

## EUROPÄISCHER RECHERCHENBERICHT

Nummer der Anmeldung

EP 24 16 0454

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2022/135451 A1 (GRONFORS OUTI [FI] ET AL) 5. Mai 2022 (2022-05-05) * Absatz [0014] * | 1-15 | INV. G01N25/18 |
| X | US 2022/178855 A1 (MONNIN ERIC [CH] ET AL) 9. Juni 2022 (2022-06-09) | 9-12 | |
| A | * Absatz [0099] - Absatz [0105] * * Abbildungen 1,2,5B * | 1-8, 13-15 | |
| X | US 6 019 505 A (BONNE ULRICH [US] ET AL) 1. Februar 2000 (2000-02-01) | 9-12 | |
| A | * Spalte 9, Zeile 16 - Spalte 11, Zeile 32 * * Abbildungen 10,11 * | 1-8, 13-15 | |
| X | WO 2019/135002 A2 (HAHN SCHICKARD GES FUER ANGEWANDTE FORSCHUNG E V [DE]) 11. Juli 2019 (2019-07-11) | 9-12 | |
| A | * Seite 40, Zeile 22 - Seite 41, Zeile 17 * * Abbildung 9 * | 1-8, 13-15 | RECHERCHIERTE SACHGEBIETE (IPC) |
| A | KOENIG R: "ZUR BESCHR[NKUNG DES ANSPRUCHSINHALTS DURCH"BAR"-DERIVATE", MITTEILUNGEN DER DEUTSCHEN PATENTANWAELTE, HEYMANN, KOLN, DE, 1997, Seite 62, XP001248632, ISSN: 0026-6884 * das ganze Dokument * | 1-15 | G01N |

Der vorliegende Recherchenbericht wurde für alle Patentansprüche erstellt

| Recherchenort | Abschlußdatum der Recherche | Prüfer |
|---|---|---|
| Den Haag | 26. Juli 2024 | Baranski, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 16 0454

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2024

| Im Recherchenbericht angeführtes Patentdokument | Datum der Veröffentlichung | Mitglied(er) der Patentfamilie | | Datum der Veröffentlichung |
|---|---|---|---|---|
| US 2022135451 A1 | 05-05-2022 | CA | 3130023 A1 | 27-08-2020 |
| | | CN | 113474301 A | 01-10-2021 |
| | | EP | 3927666 A1 | 29-12-2021 |
| | | ES | 2973958 T3 | 25-06-2024 |
| | | PL | 3927666 T3 | 29-04-2024 |
| | | US | 2022135451 A1 | 05-05-2022 |
| | | WO | 2020169591 A1 | 27-08-2020 |
| US 2022178855 A1 | 09-06-2022 | CN | 114594132 A | 07-06-2022 |
| | | EP | 4009008 A1 | 08-06-2022 |
| | | KR | 20220078500 A | 10-06-2022 |
| | | US | 2022178855 A1 | 09-06-2022 |
| US 6019505 A | 01-02-2000 | CA | 2316891 A1 | 08-07-1999 |
| | | EP | 1044366 A1 | 18-10-2000 |
| | | JP | 2002500357 A | 08-01-2002 |
| | | US | 6019505 A | 01-02-2000 |
| | | WO | 9934201 A1 | 08-07-1999 |
| WO 2019135002 A2 | 11-07-2019 | AU | 2019205103 A1 | 23-07-2020 |
| | | AU | 2022200416 A1 | 17-02-2022 |
| | | CA | 3088990 A1 | 11-07-2019 |
| | | CA | 3185299 A1 | 11-07-2019 |
| | | CN | 112055811 A | 08-12-2020 |
| | | CN | 117309929 A | 29-12-2023 |
| | | EP | 3735580 A2 | 11-11-2020 |
| | | EP | 3926335 A1 | 22-12-2021 |
| | | EP | 4141430 A1 | 01-03-2023 |
| | | JP | 7460682 B2 | 02-04-2024 |
| | | JP | 2021515882 A | 24-06-2021 |
| | | JP | 2022119773 A | 17-08-2022 |
| | | JP | 2024020474 A | 14-02-2024 |
| | | KR | 20200101988 A | 28-08-2020 |
| | | KR | 20220069122 A | 26-05-2022 |
| | | US | 2020333273 A1 | 22-10-2020 |
| | | US | 2022390397 A1 | 08-12-2022 |
| | | US | 2024159696 A1 | 16-05-2024 |
| | | WO | 2019135002 A2 | 11-07-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BECKETT C et al.** Flow-Through Quantification of Microplastics Using Impedance Spectroscopy. *ACS Sens.*, 2021, vol. 6, 238-244
- **COLSON, BECKETT C** ; **ANNA PM MICHEL**. Flow-through quantification of microplastics using impedance spectroscopy. *ACS sensors*, 2021, vol. 6 (1), 238-244
- **GONGI, WEJDENE et al.** A novel impedimetric sensor based on cyanobacterial extracellular polymeric substances for microplastics detection. *Journal of Polymers and the Environment*, 2022, vol. 30 (11), 4738-4748
- **KOPATZ, VERENA et al.** Micro-and Nanoplastics Breach the Blood-Brain Barrier (BBB): Biomolecular Corona's Role Revealed. *Nanomaterials*, 2023, vol. 13 (8), 1404
- **LESLIE, HEATHER A. et al.** Discovery and quantification of plastic particle pollution in human blood.. *Environment international*, 2022, vol. 163, 107199
- **LIM, XIAOZHI.** Microplastics are everywhere - but are they harmful.. *Nature*, 2021, vol. 593 (7857), 22-25
- **MEILER, VALENTIN et al.** Approaches to detect microplastics in water using electrical impedance measurements and support vector machines.. *IEEE Sensors Journal*, 2023, vol. 23 (5), 4863-4872
- **SENATHIRAJAH, KALA et al.** Estimation of the mass of microplastics ingested-A pivotal first step towards human health risk assessment. *Journal of Hazardous Materials*, 2021, vol. 404, 124004
- **SINGH, BIBHAWARI et al.** Microplastics as an emerging threat to human health: Challenges and advancements in their detection. *Applied Chemical Engineering*, 2023, vol. 6 (2), 2103